(19) Europäisches Patentamt
European Patent Office
Office européen des brevets

(11) EP 0 747 497 B1

(12) EUROPEAN PATENT SPECIFICATION

(45) Date of publication and mention
of the grant of the patent:
**12.05.1999 Bulletin 1999/19**

(51) Int Cl.6: **C22C 38/40**, C22C 33/02,
G21C 3/07, C21D 8/00

(21) Application number: **96108854.9**

(22) Date of filing: **03.06.1996**

(54) **High corrosion resistant high strength austenitic sintered steel, manufacturing method and use thereof for nuclear reactor, nuclear fusion reactor and component thereof.**

Hochfester, korrosionsbeständiger austenitischer Stahl geeignet für Kernreactorteile, dessen Herstellung und deren Verwendung

Acier austénitique de grande résistance mécanique et résistant à la corrosion pour les composants de réacteur nucléaire, méthode de fabrication et son utilisation.

(84) Designated Contracting States:
**DE SE**

(30) Priority: **09.06.1995 JP 142917/95**

(43) Date of publication of application:
**11.12.1996 Bulletin 1996/50**

(73) Proprietor: **Hitachi, Ltd.**
**Chiyoda-ku, Tokyo 101 (JP)**

(72) Inventors:
• **Arai, Masahiko**
**Hitachi-shi, Ibaraki 316 (JP)**
• **Aono, Yasuhisa**
**Hitachi-shi, Ibaraki 316 (JP)**
• **Nakata, Kiyotomo**
**Hitachinaka-shi, Ibaraki 312 (JP)**
• **Kasahara, Shigeki**
**Hitachi-shi, Ibaraki 316 (JP)**
• **Kato, Takahiko**
**Hitachinaka-shi, Ibaraki 312 (JP)**
• **Hirano, Tatsumi**
**Hitachinaka-shi, Ibaraki 312 (JP)**

(74) Representative: **Beetz & Partner Patentanwälte**
**Steinsdorfstrasse 10**
**80538 München (DE)**

(56) References cited:
WO-A-93/01318                WO-A-94/14992
WO-A-94/14993                US-A- 4 385 933
US-A- 4 584 031

• JOURNAL OF NUCLEAR MATERIALS, vol. 189,
no. 2, July 1992, pages 167-174, XP000602341
KATO, T. ET AL.: "Grain Boundary Segregation
under Electron Irradiation in Austenitic
Stainless Steels Modified with Oversized
Elements"
• JOURNAL OF NUCLEAR MATERIALS, 1986,
pages 141-143, XP000602494 MAZIASZ ET AL.:
"Modification of the Grain Boundary
Microstructure of the Austenitic PCA Stainless
Steel"

**Description**

BACKGROUND OF THE INVENTION

The present invention relates to a novel austenitic steel, and more particularly to a structural austenitic steel and a manufacturing method thereof and a use thereof suitable for using under a corrosive environment and a high stress loading environment. The present invention relates to a novel austenitic steel, and more particularly to a structural austenitic steel and a manufacturing method thereof and a use thereof suitable for using under a radiation environment such as in a core of a nuclear reactor.

An austenitic stainless steel has suitable characteristics for a structural material in aspects of corrosion resistance, workability and economy, and is widely used as a material for structural components. However, the austenitic stainless steel has a disadvantage in that it strength is not sufficient compared to other structural steels. As a method to maintain the corrosion resistivity and improve the strength without changing the alloy compositions of the austenitic steel, there is a so-called crystal grain fining method by which a large number of grain boundaries of deformation resistance are formed in the material. The grain boundary is a boundary between single crystals having different crystal orientations, and the grain boundary has a random crystal structure in contrast with a crystalline lattice of an regular array of atoms inside the grain. Although dislocation bearing deformation is moved inside a grain under stress to deform the grain, a grain boundary causes interaction with the dislocation and becomes a large resistance when the dislocation passes across the random grain boundary. It is well known that the deforming resistivity is expressed as a function of crystal grain size and increases in proportion to the -1/2 power of crystal grain size, that is, follows so-called Hall-Petch's rule.

A study is being progressed in recent years. In the study, austenite crystal grain size is fined to submicrometers by inducing deformation-induced martensite transformation and reverse transformation at a high temperature in an austenitic steel in rolling process. Examples of such a manufacturing method are described in "Iron and Steel", The Iron and Steel Institute od Japan, Vol.80, pages 529 to 535 (1994) and The Journal of the Japan Institute of Metals of Japan, Vol.27, No.5, pages 400 to 402 (1988).

A large amount of austenitic steel is used as a material for manufacturing structural parts used in, for example, a nuclear reactor since austenitic steel contains corrosion resistive Cr and has resistivity against a corrosive environment. However, austenitic steel used for a component in a core of a light water reactor is subjected to radiation irradiation for a long time during reactor operation, and thereby degradation in mechanical property of the austenitic steel, such as precipitation of impurities in crystal grain boundaries or decrease in its ductility, occurs. For example, in an austenitic stainless steel of which crystal grain size is formed in several tens $\mu$m of poly-crystal by common solution heat treatment, its uniform elongation becomes smaller than 1% when the austenitic stainless steel is irradiated with neutron dose of more than $4 \times 10^{25}$ n/m$^2$ in a core. Metallurgical mechanism of such a strength deterioration phenomenon under radiation environment is explained that elementary defects such as vacancies, inter-lattice atoms are introduced by the irradiation and gather to form secondary defects which increase the deforming resistivity is increased.

However, in the above manufacturing method, in the reverse transforming heat treatment process or the heat working process in which solid-solution materials are rolled all at once, the crystal grain size strongly depends on the effect of working, that is, strongly depends on degrees of working in the rolling direction and the thickness direction, and accordingly the crystal grain size is generally apt to become non-uniform in said directions. Further, there is a limitation of working degree in the method, and accordingly it is difficult to obtain ultra-fine crystals in a range from sub-micro-meter sizes to nano-meter sizes.

An austenitic stainless steel having nano-meter-sized crystals attains a high strength property due to its ultra-fine crystal grains as well as a high corrosion resistivity due to its compositions. Further, it has an advantage in that diluting effect of impurities in the grain boundaries and particularly resistibility against the structure by radiation damage due to the ultra-fine crystals.

Manufacturing of a nano-meter crystallized bulk material having austenitic steel compositions has the following problems. Nano-meter sized crystallization of crystal grains requires a process in which austenite phase is worked stronger under room temperature. Further, in order to make the crystal grain sizes uniform, it is necessary to select a method other than the method of strong rolling of a solid-solution material in which a strong rolled structure remains. A promising manufacturing method capable of coping with the above problems is the use of a mechanical grinding method. In this process, material powder is transformed into finer deformation-induced martensite phase than that through the rolling method. Therefore, the crystals are suppressed to be coarsened in a hot solidifying treatment process of the worked powder and easily crystallized into nano-meter sized crystal grains. Further, in this method, it is prospected that the nonuniformity in crystal grain size in the hot solidifying treatment process of the worked powder and in the following hot working treatment process is substantially small compared with the rolling process.

WO 93/01318 discloses austenitic steel for nuclear reactor components which steel contains (wt.%) up to 0.06 % C, up to 0.1 % Si, about 1.5-1.8 % Mn, about 10-11.4 % Ni, about 17-19 % Cr, up to 0.9 % Nb and less than 0.03 % P + S, and has a structure of fine grains with an average grain diameter below about 20 μm, preferably below about 18 μm, the lowest value of the embodiments being 6 μm.

Similarly, WO 94/14992 discloses an austenitic steel for components to be used in radiation zones of nuclear reactors which steel contains (wt.%) up to 0.06 % C, up to 0.1 % Si, about 1.5-1.8 % Mn, about 10-11.4 % Ni, about 17-19 % Cr, 0.4-0.9 % Nb and less than 0.03 % P + S, and has a structure with fine grains whose average grain diameter is under 20 μm, preferably under 18 μm as a result of controlled thermal treatment, the lowest value of the embodiments being 6 μm.

SUMMARY OF THE INVENTION

An object of the present invention is to provide an austenitic steel having a high corrosion resistivity, a high strength and a high resistivity against radiation damage by making crystal grain size uniform and ultrafined, and a manufacturing method and uses thereof for a nuclear reactor, a nuclear fusion reactor and their components.

Said object is achieved, according to a first aspect of the present invention, by a high corrosion resistant and high strength austenitic sintered steel as claimed in claim 1.

Further advantageous features of said steel are claimed in claims 2 to 4.

The above object is achieved, according to a second aspect of the present invention, by a method of manufacturing said high corrosion resistant and high strenght austenitic sintered steel as claimed in claim 5. A further advantageous feature of said method is claimed in claim 6.

According to a third aspect of the present invention a nuclear reactor internal member is made of an austenitic sintered steel as claimed in claim 1.

Likewise, a fastening member may be made of an austenitic sintered steel as claimed in claim 1.

According to a fourth aspect of the present invention several uses of the steel of claim 1 are provided as claimed in claims 9 to 13.

In order to improve efficiency of nuclear electric power generation, it is inevitable to nuclear its steam condition. This object can be attained by constructing a combined system of the nuclear reactor and a gas turbine plant and by heating steam generated in the nuclear reactor to super-heated steam of 300°C to 500°C using exhausted gas of the gas turbine plant.

It is preferable that the steel according to the present invention has a yield strength of not smaller than 300 MPa and an elongation percentage of not smaller than 0.5%, more preferably, a yield strength of 400 to 600 MPa and an elongation percentage of 10 to 30%.

By employing the aforementioned steel according to the present invention to reactor internal structural components of a BWR, the BWR can be used for 30 years or more without replacing the reactor internal structural components, and particularly can be used for 40 years without replacing the reactor internal structural components. Further, the aforementioned steel according to the present invention is effective for long term use in a large capacity nuclear reactor having a thermal output power of 3200 MW or more, a reactor pressure of 7.0 MPa or higher and a temperature of 288°C or higher.

By employing the aforementioned steel according to the present invention to reactor internal structural components of an ABWR, the ABWR can attain a large capacity of a thermal output power of 4300 MW or more, a reactor pressure of 7.2 MPa or higher and a temperature of 288°C or higher. Further, the ABWR can be used for 30 years or more without replacing the reactor internal structural components.

Especially, by employing the aforementioned steel according to the present invention, it is possible to attain a radiation dose during a scheduled inspection of 20 mSv/man-year or less, a scheduled inspection time period of 30 days or less, an availability of 90% or larger, a thermal efficiency of 35% or more, a void coefficient of -2.8 to -4.2%, and a discharged burn-up of 45 to 70 GWd/t.

Strengthening of a high corrosion-resistant austenitic steel, which is to be solved by the present invention, can be solved by making its crystal grain size ultra-fine. This cause can be explained by that since a crystal grain boundary is an obstacle against slip motion of dislocation bearing plastic deformation, resistivity against plastic deformation can be substantially increased by increasing density of grain boundaries as high as possible.

In order to decrease a grain size of an austenitic steel to an ultra-fine size of nano-meter scale, it is effective to utilize properties of deformation-induced martensite transformation of austenitic stainless steel by working and reverse transformation to austenite phase at high temperature. A conventional rolling method has an upper limit in working degree and, therefore, fine deformation induced martensite cannot be accumulated sufficiently. A powder metallurgical method is employed for ultra-fining of grain size to attain a very strong working, and a mechanical grinding employed to be combined with alloying process. For the strong working of powder material, it is suitable to employ an attriter or a planetary ball mill which can be in prospect of mass production of processed powder. Initial crystal structure of the powder is transformed from austenite phase ($\gamma$) of face-centered cubic structure to martensite phase ($\alpha'$) of body-centered cubic structure by the working. However, in order to obtain ultra-fine grain $\gamma$-phase of at least several tens nano-meters by reverse transformation, it is preferable to make the grain size of the $\alpha'$-phase at least 15 nm or smaller.

In the present stage, a suitable technology of solidifying the above processed powder is HIP or hot extruding which is capable of easily obtaining a large member. Solidifying temperature depends on a required final grain size, and is preferably above a temperature range capable of sintering the processed powder, that is, above 700°C. Especially, in a case where a nano-meter scale of grain size is required, it is better to add a condition of a temperature lower than the re-crystallization temperature, that is, below 900°C. Above the re-crystallization temperature, atomic diffusion becomes active to cause grain growth. However, in a case of obtaining grains of a sub-micrometer scale, processing above 900°C may be possible. In the processed powder, atomic diffusion is active due to function of a large amount of lattice defects (point defects) introduced by working. When there exist parts in a solidified material which are not sintered by the solidifying process at a temperature near the aforementioned lower limit temperature, the un-sintered parts can be eliminated by the following hot working process performed at a temperature above the aforementioned limit temperature. In any case, in order to adjust the grains to a finally required grain size and to a homogeneous structure, it is desired to perform a hot working such as rolling at a temperature of 700°C to 1050°C. In a case of manufacturing a member having a shape such as rod, plate, strip or tube-shaped member, the shaping is preferably performed in the aforementioned final grain size adjusting process.

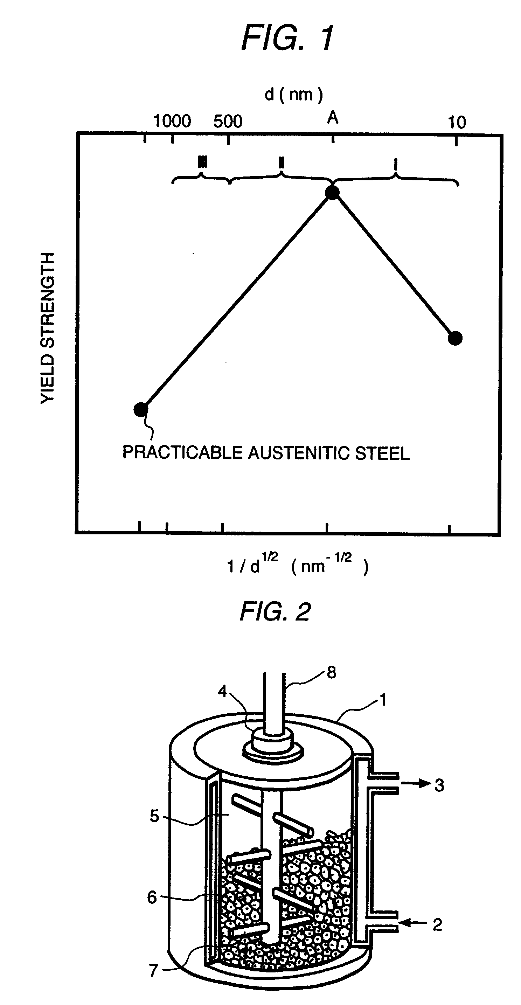

The present austenitic steels depend on a condition satisfying requirements for corrosion resistivity, strength, radiation resistivity and so on, and the average grain sizes are preferably within the range of 10 nm to 1000 nm, and particularly the grain sizes required by deformation behavior of ultra-fine grain austenitic steels can be classified into three regions. In a general property, the relationship between grain size up to nano-meter scale and yield strength of a metal or an alloy has a grain size A which corresponds to a peak point of the yield strength as shown in FIG.1. The yield strength decreases as the grain size decreases. The grain sizes can be divided into three regions: a region where deformation due to dislocation hardly occurs (small elongation), that is, the region I from 10 nm to A showing the maximum yield strength value; a grain region where yield strength increases according to the aforementioned Hall-Petch's rule, deformation progresses by slip motion of dislocation inside crystal grain and plastic elongation are comparatively large, that is, the region II from A to 500 nm; the region III from 500 nm to 1000 nm. The reason to set the lower limit 10 nm of the region I is that fining of the aforementioned $\alpha'$-phase capable of obtaining the final $\gamma$-phase grain size is estimated in the range of 5 nm to 10 nm at maximum. On the other hand, the reason to set the upper limit of 1000 nm is that the upper limit is considered to be lower limit of the present trend of the ultra-fine grain technology. The steels in this region have an super-plastic effect due to grain slip at a high temperature and have an advantage to improve workability at high temperature. The region II is the most suitable region in strength, and suitable for a member mostly requiring using strength. The region III is suitable for a member for toughness.

Corrosion resistivity of the austenitic steel in the above range can be attained by more homogenizing and fining the crystals as well as by providing chemical composition for corrosion resistivity. Comparing with a steel manufactured by melting-solidifying, a steel manufactured by mechanical grinding has a structure being small in precipitation and deposition of corrosion affecting atoms dissolved in grains by manufacturing processed powder of non-equilibrium solid solution and solidification at low temperature. This depends on not having melting process. Further, corrosive impurities in atomic level are held in a large number of grain boundaries having expanded lattice interval produced by grain fining and are hardly deposited. Furthermore, fining of grains affects on formation of pitting corrosion and number of pits to improve corrosion resistivity.

In regard to material defects by neutron irradiation, extremely fining of grain size decreases accumulation of precipitation accompanied by irradiation induced diffusion generated in an austenitic stainless steel having ordinary grain size of several tens nano-meters and irradiation defects obstructing plastic deformation. Fining of grain size increases occupation ratio in bulk volume percentage of grain boundaries having expanded lattice interval, which suppresses occurrence of precipitation. Further, since approaching of grain size closer to size of an irradiation defect increases interaction between the defect and the grain boundary to increase distinguishing frequency of the defects at the grain boundary, an amount of the defects obstructing plastic deformation inside grain can be decreased.

As described above, by fining crystal grains of a material and introducing a large number of grain boundaries, the strength is increased, and the corrosion resistivity and the resistivity against stress corrosion crack are increased, and further the resistivity against radiation defect is improved. The object of the present invention is to provide an austenitic steel in which the strength is increased, and occurrence of crack is prevented, and the corrosion resistivity and the resistivity against radiation defect is improved.

Ni stabilizes austenite phase and is added above 9% to increase corrosion resistivity. High Ni concentration improves corrosion resistivity. In a case where a high Ni concentration steel is used together with another alloy under the same corrosive environment, electro-chemical reaction occurs at the contact portion to speed up corrosion of the other alloy. Therefore, upper limit of the concentration is 30%.

Cr is required 14% or more to improve corrosion resistivity. However, when the concentration exceeds 20%, austenite phase is unstabilized and produces $\sigma$-phase to make the steel brittle. Therefore, the concentration is 14 to 20%.

Si and Mn are added as deoxidizers at manufacturing raw steel powder and Mn is added as a desulfurizer. The content of Si is 1% or less and the concentration of Mn is 2% or less according to the JIS standard for commercial SUS 304 and SUS 316 and so on. It is preferable that Si is 0.2 to 0.5% and Mn is 0.5 to 1.5%.

P and S are contained at manufacturing raw steel powder and have an adverse effect of corrosion resistivity. It is preferable that the content of P is 0.045% or less and the concentration of S is 0.03% or less according to the JIS standard for commercial SUS 304 and SUS 316 and so on.

Mo is an additive element for corrosion resistivity and solid-solution reinforcing. However, addition of more than 3% generates σ-phase to make the material brittle. Therefore, in order to provide desired corrosion resistivity and strength, the concentration of Mo is optionally 3% or less, preferably 2 to 3%.

In a case where a material is used for a welding joint, it is preferable that C is decreased as low as possible in order to prevent degradation of corrosion resistivity in heat-affected portion, and the concentration of C in the material depends on concentration of C in an available raw powder material. However, in a case where a material is used for a non-welding member, it is preferable to add C rather to a high concentration in order to strengthen the material and to strengthen the grain boundaries. The upper limit concentration is 0.1%. When the concentration exceeds the upper limit, carbides are apt to deposit and characteristics of austenitic steels are eliminated.

Ti, Zr, Nb are carbide and nitride forming elements. Since Ti, Zr, Nb are over-sized atoms in a solid-solution state, addition of these elements improves resistivity against irradiation by fixing atomic vacancies introduced by irradiation. Since addition of these elements produces a large amount of carbides containing these elements to make the steel brittle in a high carbon composition steel above 0.1%, addition of these elements is not effective. A raw powder material generally contains oxygen of nearly 0.2%. In taking the contained amount of C into consideration, optional maximum amounts of Ti, Zr, Nb are 1.0, 2.0, 1.0% in a case of adding a single element, respectively, and 2.0%, preferably 1.5% at maximum in a case of adding plural kinds of the elements. The surplus of the additive elements is solid-solved to exert the aforementioned effect.

As described above, by fining crystal grains of a material and introducing a large number of grain boundaries, the strength is increased, and the corrosion resistivity and the resistivity against stress corrosion cracksare increased, and further the resistivity against radiation defect is improved.

The steel according to the present invention can be applied to a strength member used under an environment in which grain boundaries generally become a cause of deterioration of the material. Further, the steel according to the present invention can be applied not only to a nuclear reactor core structural member but also to a structural member which suffers radiation damage and is used under a water cooling environment or a hydrogen containing environment.

BRIEF DESCRIPTION OF THE DRAWINGS

FIG.1 is a graph showing the relationship between average grain size and yield strength and elongation percentage of an ultra-fine grain austenitic steel in accordance with the present invention.

FIG.2 is a view showing the construction of an apparatus used for manufacturing an ultra-fine grain austenitic steel in accordance with the present invention.

FIG.3 is a chart showing the relationship between milling time and intensity of diffracted X-ray of mechanical alloying powders used for manufacturing an ultra-fine grain austenitic steel in accordance with the present invention.

FIG.4 is a graph showing the relationship between milling time and average grain size of mechanical alloying powders used for manufacturing an ultra-fine grain austenitic steel in accordance with the present invention.

FIG.5 is a graph showing the relationship between milling time and phase transformation obtained from intensity of diffracted X-ray of mechanical alloying powders used for manufacturing an ultra-fine grain austenitic steel in accordance with the present invention.

FIG.6 is a view showing the construction of an apparatus used for manufacturing an ultra-fine grain austenitic steel in accordance with the present invention.

FIG.7 is a graph showing the relationship between heat treatment temperature and average grain size of an austenitic steel No.5 in accordance with the present invention.

FIG.8 is a graph showing the relationship between heat treatment time and average grain size of an austenitic steel No.5 in accordance with the present invention.

FIG.9 is a graph showing the relationship between average grain size and yield strength for an austenitic steel No.5 in accordance with the present invention and a practicable conventional steel 316L.

FIG.10 is a graph showing the relationship between 0.2% yield strength and average grain size.

FIG.11 is a graph showing the relationship between 0.2% yield strength and elongation percentage.

FIG.12 is a graph showing the stress versus strain curves for a vacuum annealed steel and a roll-quenched steel of an austenitic steel No.5 in accordance with the present invention.

FIG.13 is a perspective view showing a stress corrosion crack test method.

FIG.14 is a perspective view showing a nuclear reactor core using an ultra-fine grain sized austenitic steel in accordance with the present invention.

FIG.15 is a plan view showing an upper grid plate.

FIG.16 is a cross-sectional view showing the section VII - VII of FIG.15.

FIG.17 is an enlarged view showing the portion of VIII of FIG. 16.

FIG.18 is an enlarged view showing an upper grid plate.

FIG.19 is an enlarged view showing the portion of X of FIG.18.

FIG.20 is an enlarged view showing the portion of XI of FIG.18.

FIG.21 is a cross-sectional view showing a core support plate.

FIG.22 is a perspective view showing a fuel support piece.

FIG.23 is a cross-sectional view showing a peripheral fuel support piece.

FIG.24 is an enlarged view showing the portion of XV of FIG.21.

FIG.25 is a view showing a repairing method of a defective portion.

FIG.26 is a cross-sectional view showing a repaired portion using a taper-less bolt.

FIG.27 is a cross-sectional view showing a repaired portion using a tapered bolt.

FIG.28 is a front view showing an upper grid plate.

FIG.29 is a front view showing a core support plate.

FIG.30 is a cross-sectional view showing a neutron detector tube.

FIG.31 is a partially cut-away perspective view showing a control rod.

FIG.32 is a cross-sectional view showing a fuel assembly.

FIG.33 is a partially cut-away view of a fuel rod.

FIG.34 is a partially cut-away view of a neutron source holder.

FIG.35 is a cross-sectional view showing an advanced boiling water reactor (ABWR).

FIG.36 is a partially cut-away perspective view showing a core structure of a PWR.

FIG.37 is a cross-sectional view showing a nuclear fusion reactor.

FIG.38 is a perspective view showing a divertor.

DESCRIPTION OF EMBODIMENTS

Embodiment 1

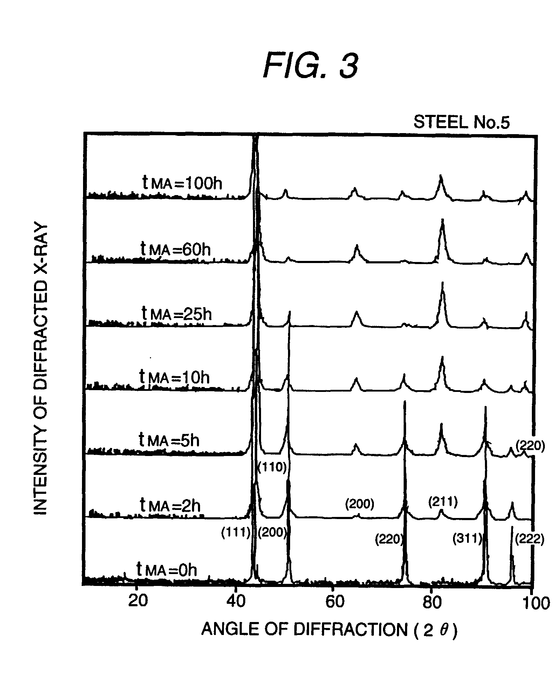

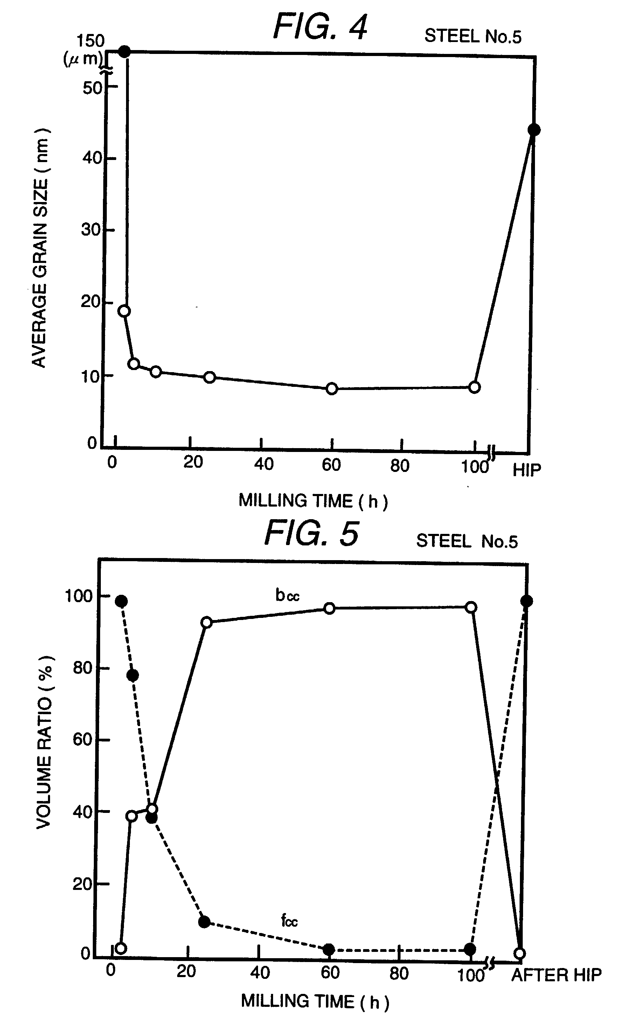

An embodiment of a manufacturing method of an ultra-fine grain sized austenitic steel in accordance with the present invention will be described below. In this embodiment, an attriter shown in FIG.2 was used for mechanical alloying process. This apparatus is composed of a stainless crushing tank 1 having the volume of 25 liters, a cooling water inlet port 2 of the tank 1, a cooling water outlet port 3, a gas seal 4 for sealing a replacing gas such -as argon or nitrogen gas, a mixed powder 5 of 5 kg weight, steel balls 6 having 10 mm diameter inside the crushing tank, and an agitator arm 7. Rotation from an external driving system is transmitted to an arm shaft 8 and the agitator arm 7 is driven to be rotated. The balls 6 were mixed by the agitator arm 7 to bring in collision between the balls 6 one another and between the balls 6 and the inside wall of the tank 1, and thereby the mixed powder 5 was strengthening-processed to obtain an alloy powder having a fine crystal grain size. Rotating speed of the arm 8 was 170 rpm. No.1 to 8 of Table 1 show main chemical compositions (weight %) of various ultra-fine grain austenitic steels in connection with the present invention. FIG.3, FIG.4 and FIG.5 show the relationship between milling time and diffraction peak measured by X-ray diffraction method, the relationship between milling time and average grain size and the relationship between milling time and phase transformation for a steel No.5 as a typical example according to the present invention, respectively. Average grain size below 100 nm was measured by X-ray diffraction method, and average grain size above 100 nm was measured using an electron microscope. When milling was performed above 30 hours, the average grain size became saturated to 8 nm and transformation of $\gamma$-$\alpha$' was completed. The powder milled for 60 hours was formed in a bulk member by hot isostatic pressing process (HIP) [condition 1: 850°C × 0.5 hour, 2000 kgf/cm$^2$]. Table 2 shows the condition of HIP process.

Table 1

| Chemical composition (wt%) | | | | | | | | | | | | | | |
|---|---|---|---|---|---|---|---|---|---|---|---|---|---|---|
| Na | Fe | Cr | Ni | Mn | P | Si | S | C | Mo | | Ti | Zr | Nb | |
| 1 | bal. | 18.7 | 9.3 | 1.7 | 0.04 | 0.3 | 0.02 | 0.05 | - | - | - | - | - | - |
| 2 | bal. | 19.1 | 10.1 | 1.5 | 0.03 | 0.4 | 0.02 | 0.02 | - | - | - | - | - | - |

Table 1 (continued)

| Chemical composition (wt%) | | | | | | | | | | | | | | |
|---|---|---|---|---|---|---|---|---|---|---|---|---|---|---|
| Na | Fe | Cr | Ni | Mn | P | Si | S | C | Mo | | Ti | Zr | Nb | |
| 3 | bal. | 14.8 | 25.1 | 1.6 | 0.03 | 0.3 | 0.02 | 0.09 | - | - | - | - | - | - |
| 4 | bal. | 17.1 | 18.2 | 0.5 | 0.03 | 0.3 | 0.02 | 0.01 | - | - | - | - | - | - |
| 5 | bal. | 17.8 | 11.8 | 1.4 | 0.03 | 0.3 | 0.02 | 0.02 | 2.1 | - | - | - | - | - |
| 6 | bal. | 16.9 | 26.6 | 1.5 | 0.03 | 0.4 | 0.02 | 0.05 | 2.5 | - | - | - | - | - |
| 7 | bal. | 14.6 | 12.5 | 1.6 | 0.03 | 0.3 | 0.02 | 0.09 | 2.3 | - | - | - | - | - |
| 8 | bal. | 19.6 | 9.2 | 0.5 | 0.03 | 0.3 | 0.02 | 0.01 | 2.8 | - | - | - | - | - |
| 9 | bal. | 18.5 | 9.5 | 1.5 | 0.03 | 0.2 | 0.02 | 0.05 | - | - | 0.3 | - | - | - |
| 10 | bal. | 19.5 | 11.1 | 0.9 | 0.03 | 0.2 | 0.02 | 0.02 | - | - | - | 0.3 | - | - |
| 11 | bal. | 19.0 | 9.5 | 1.5 | 0.03 | 0.3 | 0.02 | 0.05 | - | - | - | - | 0.3 | - |
| 12 | bal. | 18.5 | 10.8 | 1.4 | 0.04 | 0.2 | 0.02 | 0.02 | - | - | 1.0 | - | - | - |
| 13 | bal. | 19.2 | 10.2 | 0.5 | 0.03 | 0.2 | 0.02 | 0.04 | - | - | - | 2.0 | - | - |
| 14 | bal. | 18.8 | 10.2 | 1.2 | 0.03 | 0.5 | 0.02 | 0.05 | - | - | 0.2 | 0.1 | - | - |
| 15 | bal. | 18.1 | 12.2 | 0.8 | 0.03 | 0.2 | 0.02 | 0.05 | - | - | 0.7 | - | 0.2 | - |
| 16 | bal. | 19.1 | 11.2 | 0.9 | 0.03 | 0.2 | 0.02 | 0.05 | - | - | - | - | 1.0 | - |
| 17 | bal. | 17.2 | 13.2 | 1.5 | 0.03 | 0.2 | 0.02 | 0.02 | 2.2 | - | 0.3 | - | - | - |
| 18 | bal. | 17.6 | 11.1 | 0.9 | 0.04 | 0.6 | 0.01 | 0.06 | 2.1 | - | 0.2 | 0.3 | - | - |
| 19 | bal. | 16.3 | 13.3 | 1.5 | 0.03 | 0.3 | 0.02 | 0.05 | 2.2 | - | 0.7 | - | 0.6 | - |
| 20 | bal. | 16.9 | 12.1 | 1.4 | 0.03 | 0.2 | 0.01 | 0.05 | 2.5 | - | - | 1.2 | - | - |
| 21 | bal. | 17.4 | 10.3 | 0.5 | 0.03 | 0.2 | 0.02 | 0.04 | 2.3 | - | 0.4 | - | 0.3 | - |
| 22 | bal. | 17.2 | 11.2 | 1.2 | 0.03 | 0.7 | 0.02 | 0.05 | 2.0 | - | - | 0.1 | 0.3 | - |
| 23 | bal. | 16.2 | 12.3 | 0.8 | 0.04 | 0.2 | 0.02 | 0.05 | 2.5 | - | 0.2 | 0.2 | 0.6 | - |
| 24 | bal. | 17.5 | 12.0 | 0.8 | 0.03 | 0.2 | 0.02 | 0.05 | 2.1 | - | 0.5 | 0.7 | 0.2 | - |

Table 2

| | temperature(°C)×time(h) | pressure (kgf/cm$^2$) |
|---|---|---|
| condition 1 | 850(°C)×0.5(h) | 2000(kgf/cm$^2$) |
| condition 2 | 900(°C)×0.5(h) | 2000(kgf/cm$^2$) |
| condition 3 | 950(°C)×0.5(h) | 2000(kgf/cm$^2$) |

Embodiment 2

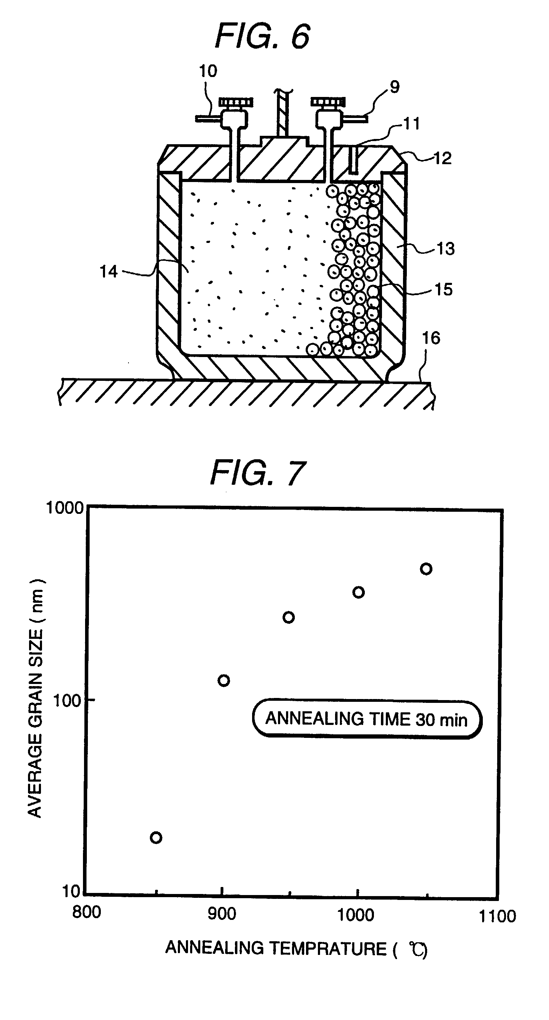

An embodiment of a manufacturing method of an ultra-fine grain sized austenitic steel in accordance with the present invention will be described below. In this embodiment, a planetary ball mill shown in FIG.6 was used for mechanical alloying process. This apparatus is composed of a stainless cover 12 having a vacuum pumping valve 9, a displacing valve 10 for Ar gas or nitrogen gas and a small hole 11 for temperature measurement, a stainless vessel 13 of volume of 500 cc, a mixed powder 14 of 300 g weight, steel balls 15 having diameter of 10 mm inside the vessel 13. Rotation from an external driving system was transmitted to a rotating disk 16, and thereby centrifugal force was produced to four vessels 13 arranged in a cross shape on the rotating disk 16 and each of the vessels 13 itself was rotated to produce collision between the balls 15 one another and between the balls 15 and the inside wall of the vessel 13, and thereby the mixed powder 14 was strengthening-processed to obtain an alloy powder having a fine crystal grain size. Rotating speed of the rotating disk was 150 rpm. No.1 to 24 of Table 1 shows main chemical compositions of various ultra-fine grain austenitic steel in connection with the present invention. The powder was formed in a bulk member by hot isostatic pressing process (HIP) [condition 1: 850°C × 0.5 hour, 2000 kgf/cm$^2$].

Embodiment 3

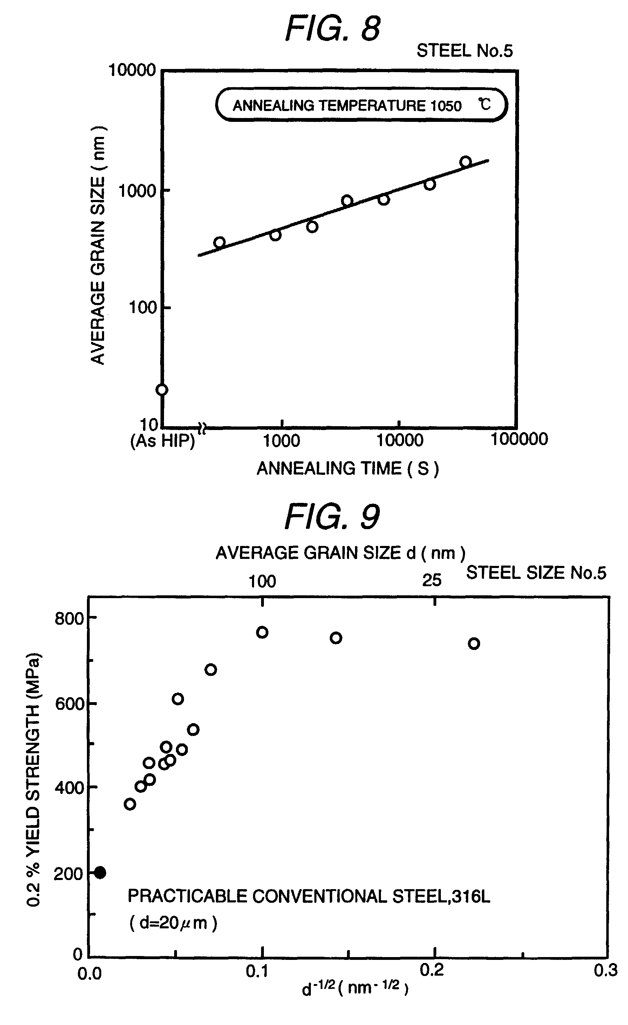

The bulk materials obtained through HIP process of ultra-fine grain sized austenitic steels having compositions shown in Table 1 were vacuum-annealed for 0.5 hour at temperatures 900°C, 950°C, 1000°C, 1050°C. The bulk materials were also vacuum-annealed at temperature 1050°C for 0.25, 0.5, 1.0, 2.0, 5.0, 10.0 hour. A tensile test (strain rate : - 10$^{-4}$/s) was performed using these samples at room temperature. In steels having high C concentration and steels with additives Ti, Zr, Nb, grain growth was slower compared to in steels having low C concentration and steels without additives Ti, Zr, Nb. Therefore, C, Ti, Zr, Nb had suppression effect for grain growth. FIG.7 shows the relationship between heat treatment temperature and average grain size of the austenitic steel No.5 as a typical example in accordance with the present invention in a case of annealing time of 30 minutes. FIG.8 shows the relationship between heat treatment time and average grain size of the austenitic steel No.5 in a case of annealing temperature of 1050°C. FIG.9 shows the relationship between average grain size and yield strength for the austenitic steel No.5 together with for a practicable conventional steel 316L. Table 3 shows the relationship between average grain size and yield strength and elongation percentage. Table 4 shows average grain sizes, yield strengths and elongation percentages in a case of annealing temperature of 1050°C and annealing time of 0.5 hour for the steels No.5, No.7 and No.17 in accordance with the present invention. Average grain size below 100 nm was measured by X-ray diffraction method, and average grain size above 100 nm was measured using an electron microscope. HIP process was performed at temperatures higher than that in Embodiments 1 and 2 using the mechanical alloying processed powders having compositions shown in Table 1 [condition 2 : 900°C × 0.5 hour, 2000 kgf/cm$^2$ ; condition 3 : 950°C × 0.5 hour, 2000 kgf/cm$^2$]. In the condition 2, the average grain size become larger than those in Embodiments 1 and 2, and in condition 3 average grain sizes of sub-micrometer level were obtained. Table 5 shows the grain sizes obtained under these conditions for the austenitic steel No.5 as a typical example in accordance with the present invention.

Table 3

|  | Average grain size (nm) | 0.2% yield strength (MPa) | Elongation percentage (%) |
|---|---|---|---|
| No.5-1 | 20 | 735 | 0.9 |
| No.5-2 | 50 | 775 | 1.2 |
| No.5-3 | 80 | 790 | 3.2 |
| No.5-4 | 200 | 690 | 3.6 |
| No.5-5 | 275 | 529 | 13 |
| No.5-6 | 350 | 486 | 21 |
| No.5-7 | 370 | 607 | 5.0 |
| No.5-8 | 425 | 464 | 18 |
| No.5-9 | 486 | 454 | 17 |
| No.5-10 | 500 | 486 | 13 |
| No.5-11 | 796 | 457 | 25 |
| No.5-12 | 816 | 415 | 18 |
| No.5-13 Comp. | 1095 | 401 | 23 |
| No.5-14 Comp. | 1600 | 363 | 24 |
|  |  |  |  |
| Conventional steel | 20000 | 200 | 57 - 65 |

Table 4

| No. | Average grain size (nm) | 0.2% yield strength (MPa) | Elongation percentage (%) |
|---|---|---|---|
| 5 | 486 | 454 | 17 |

Table 4   (continued)

| No. | Average grain size (nm) | 0.2% yield strength (MPa) | Elongation percentage (%) |
|-----|-------------------------|---------------------------|---------------------------|
| 7 | 421 | 472 | 14 |
| 17 | 413 | 475 | 13 |

Table 5

| | Temperature (°C)×Time (h) | Pressure (kgf/cm$^2$) | Average grain size (nm) |
|---|---|---|---|
| Condition 1 | 850(°C)×0.5(h) | 2000(kgf/cm$^2$) | 20 |
| Condition 2 | 900(°C)×0.5(h) | 2000(kgf/cm$^2$) | 85 |
| Condition 3 | 950(°C)×0.5(h) | 2000(kgf/cm$^2$) | 250 |

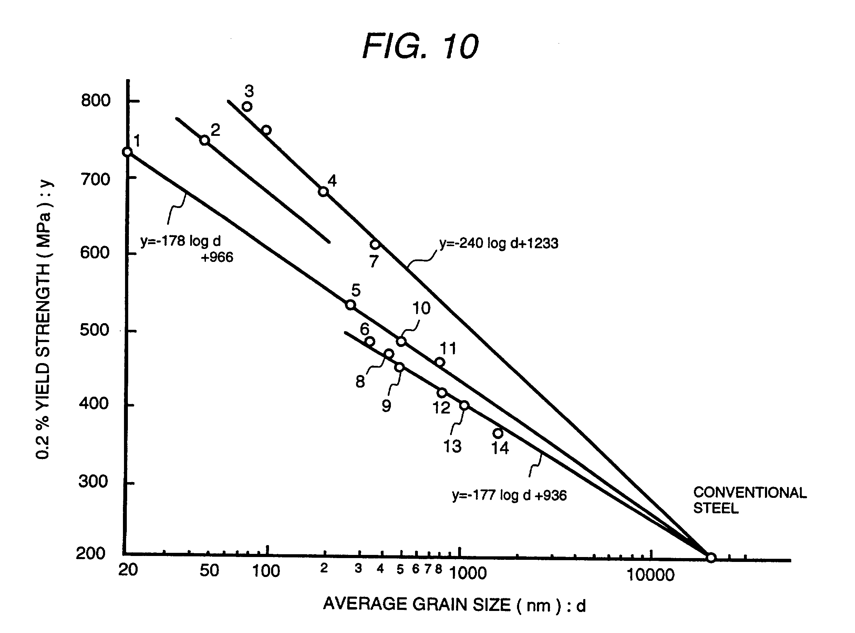

FIG.10 is a graph showing the relationship between average grain size (d) taking in natural logarithm and 0.2% yield strength (y). Since FIG.9 cannot clearly express the relationship between grain size and yield strength at fine-sized region, the relationship is expressed as shown in FIG.10. As shown in the figure, the yield strength increases as the grain size decreases. However, the relationship between yield strength and grain size can be expressed by plural lines. As the grain size is adjusted by the relationship of heat treatment temperature and heating time, it is thought that the lines are closely related to the relationship. Each of equations in the figure expresses each of the lines. Sintered steel of austenitic steel containing 0.02% C-2.1% Mo comes between the lower limit value of y=-177logd+936 and the upper limit value of y=1240logd+1233 . The lower limit for sintered steel of austenitic steel of Mo-free is low by nearly 50 MPa at average grain size of 400 nm, and the upper limit for sintered steel of austenitic steel containing Ti, Zr, Nb is high by nearly 100 MPa at average grain size of 400 nm.

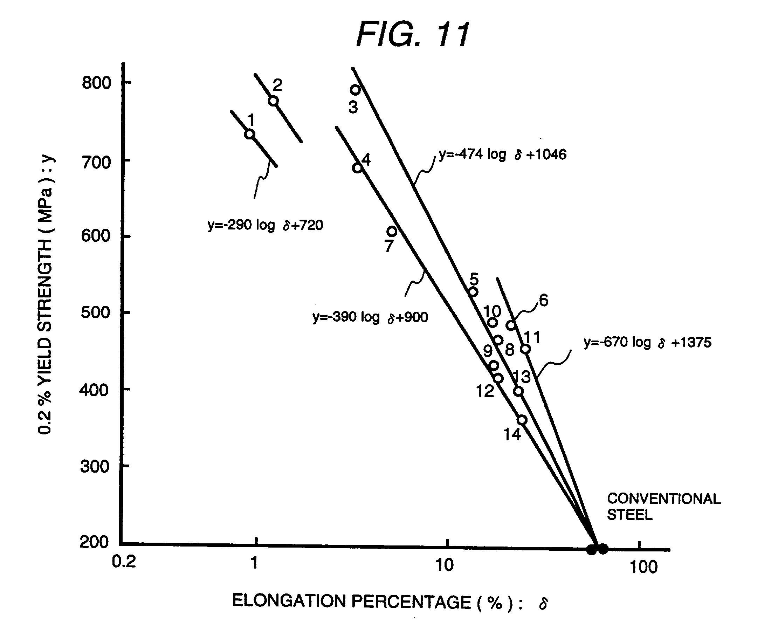

FIG.11 is a graph showing the relationship between elongation percentage (%) δ taking in natural logarithm and 0.2% yield strength (y). As shown in the figure, the relationship between 0.2% yield strength and elongation percentage is expressed by plural lines, as the same as in FIG.10. The relationship for the sintered steel in the embodiment comes between the lower limit value of y=-290logδ+720 and the upper limit value of y=-670logδ+1375 . Depending on alloy composition, as the same as the above, the lower limit of yield strength is lower by nearly 50 MPa at elongation percentage of 20%, and the upper limit is higher by 100 MPa.

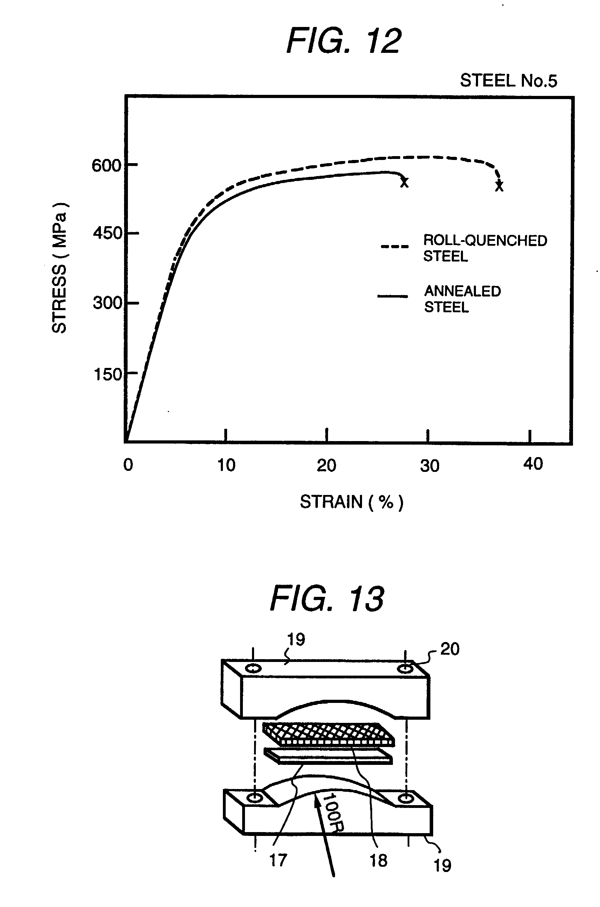

The bulk materials solidified in this embodiment and Embodiments 1 and 2 were hot-rolled at 700°C to 1050°C to reduction ratio of 5% to 40% and quenched. Then, a tensile test (strain rate : - 10$^{-4}$/s) was performed under room temperature. The yield strength and the elongation percentage were improved compared to the materials which were vacuum-annealed after solidification by HIP process. FIG.12 shows the stress versus strain curves for the steel hot-rolled at 700°C to reduction ratio of 20% of the austenitic steel No.5 as a typical example in accordance with the present invention. Table 6 shows average grain sizes obtained from hot-rolling process at 700°C.

Table 6

| Reduction ratio (%) | Average grain size (nm) |
|---------------------|-------------------------|
| 20 | 40 |
| 40 | 38 |
| 60 | 40 |
| 40 | 32 |

Embodiment 4

A CBB test as a stress corrosion crack test was conducted using bulk materials which were HIP processed ultra-fine grain austenitic steels having compositions shown in Table 1. FIG.13 is a perspective view showing the CBB test method. A test piece 17 together with a glass fiber wool 18 for a given gap to the test piece were interposed between holders 19, and bolts were inserted into bolt holes 20 and the test piece was fastened and bent between the holders 19. Then the test piece was disposed for stress corrosion crack test in an autoclave. The test piece was immersed in a high temperature and high pressure pure water (solved oxygen concentration 8 ppm) of 288°C, 85 kg/cm$^2$ for 500 hours. Then, after unloading the test piece, presence or absence of occurrence of crack was inspected by observing the cross section of the test piece using an optical microscope. No cracks were observed in all of the test pieces.

Embodiment 5

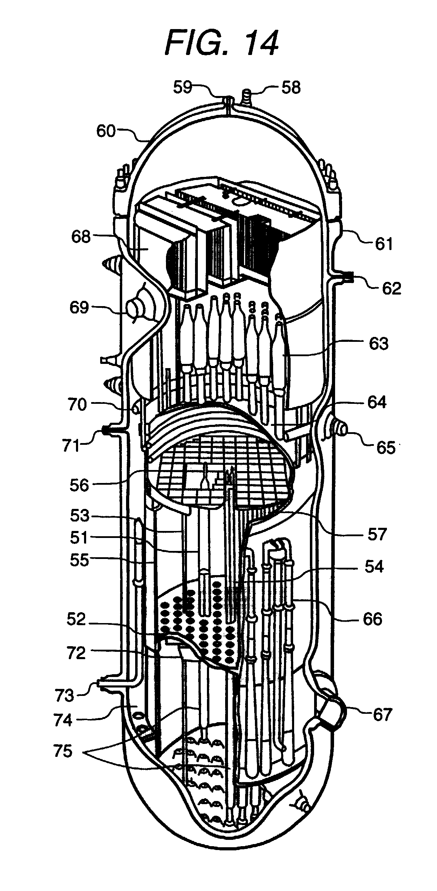

The ultra-fine grain austenitic steel No.5 according to the present invention manufactured in Embodiment 3 was hot-forged at temperature of 800°C to form a rod having 20 mm diameter and 300 mm length and a plate having 50 mm width, 200 mm length and 5 mm thickness as structural members for general industry. Further, the ultra-fine grain austenitic steels No.2, No.5 and No.17 according to the present invention manufactured in Embodiment 3 were hot-forged at temperature of 800°C to form various kinds of structural members for a nuclear reactor core of a boiling water reactor shown in FIG.14. The nuclear reactor is operated at steam temperature of 286°C and steam pressure of 70.7 atg, and can generate electric power of 500, 800 or 1100 MW. Names of the components are as follows. A neutron source pipe 51, a core support plate 52, a neutron detector tube 53, a control rod 54, a core shroud 55, an upper grid plate 56, a fuel assembly 57, an upper head spray nozzle 58, a vent nozzle 59, a pressure vessel head 60, a flange 61, a measurement nozzle 62, a steam separator 63, a shroud head 64, a feed water inlet nozzle 65, a jet pump 66, a steam dryer 68, a steam outlet nozzle 69, a feed water sparger 70, a core spray nozzle 71, a lower core grid 72, a recirculation water inlet nozzle 73, a baffle plate 74 and a control rod guide tube 75.

The aforementioned upper grid plate 56 has a limb barrel 21, a flange 22 and grid plates 35 which are made of a multi-crystal rolled material of SUS 316 steel. The grid plates 35 are crossed each other but not welded each other. The core support plate 52 is also made of a multi-crystal rolled material of SUS 316 steel, and manufactured from a single rolled plate, bored to form holes for attaching fuel support pieces, and fixed to the reactor vessel at the peripheral surface. Therefore, these plates are constructed so that they have no welded part in the central portions to which neutrons are irradiated.

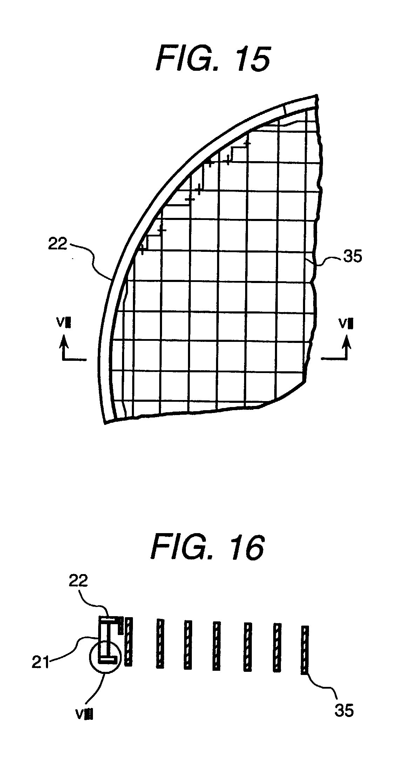

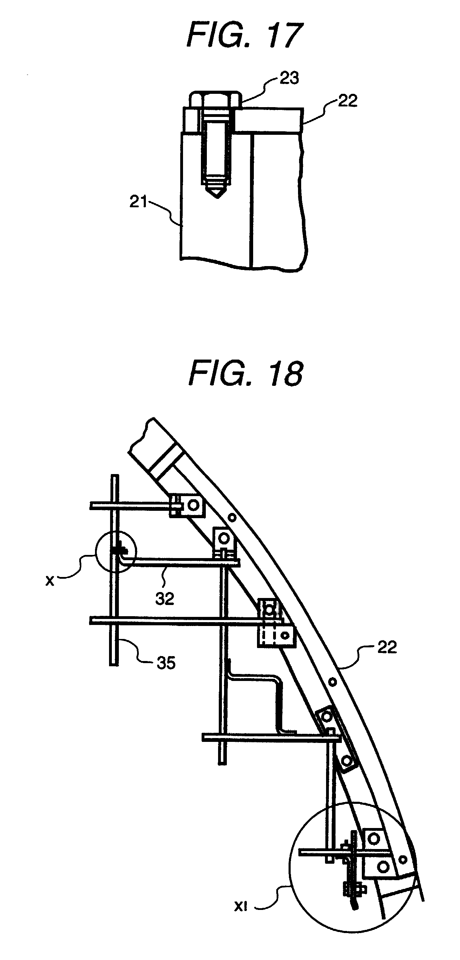

FIG.15 is a plan view showing a part of the upper grid plate. FIG.16 is a cross-sectional view being taken on the plane of the line VII-VII of FIG.15. FIG.17 is an enlarged view being taken on the plane of the line VIII-VIII of FIG. 18. The aforementioned alloy according to the present invention is applied to the bolt 23 of FIG.17. The bolt 23 according to the present invention is for fastening the limb barrel 21 and the upper flange 22 and manufactured by being cut threads to a round rod by cut working.

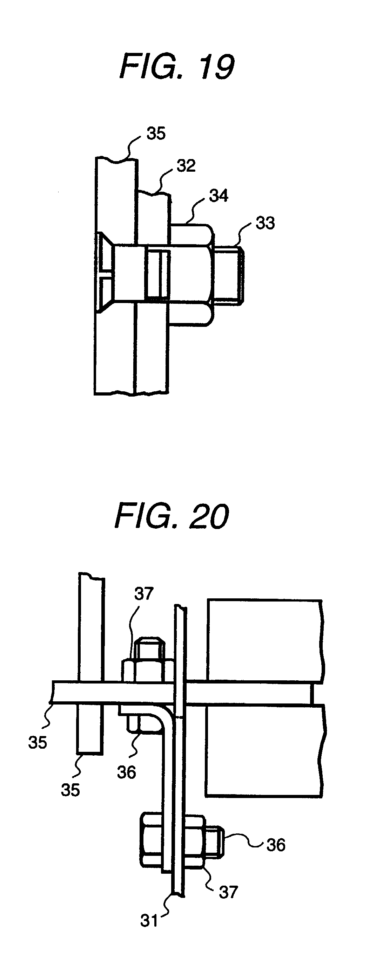

FIG.18 is an enlarged view showing the upper grid plate. FIG.19 is an enlarged view showing the portion of X of FIG.18. In FIG.19, numeral 33 is bolt and 34 nut. FIG.20 is an enlarged view showing the portion of XI of FIG.18. Bolts and nuts for fastening and fixing the grid plate 31 of the upper grid plate 56 and the support plate 32, and bolts 36 and nuts 37 for fastening the grid plate 31 and the support plate 32 and fastening the grid plate 32 and the grid plate 35 were manufactured using the ultra-fine grain austenitic steels No.2, No.5 and No.17 according to the present invention, as the same as the above.

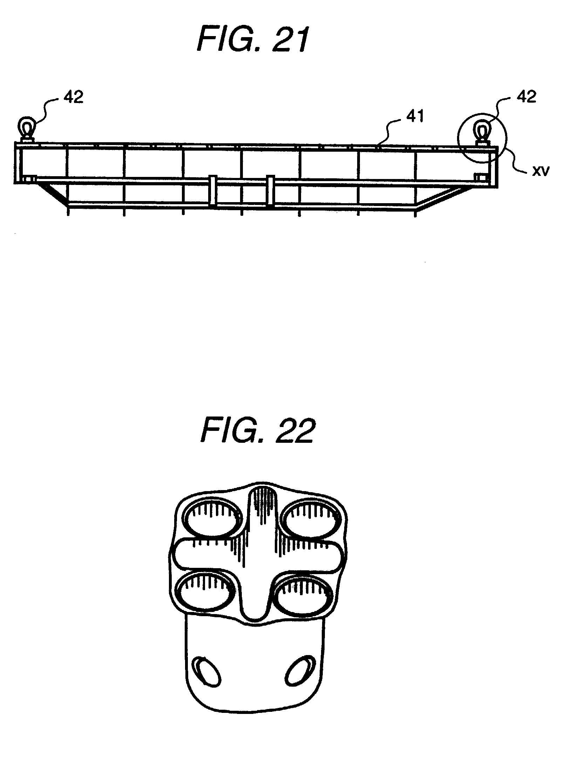

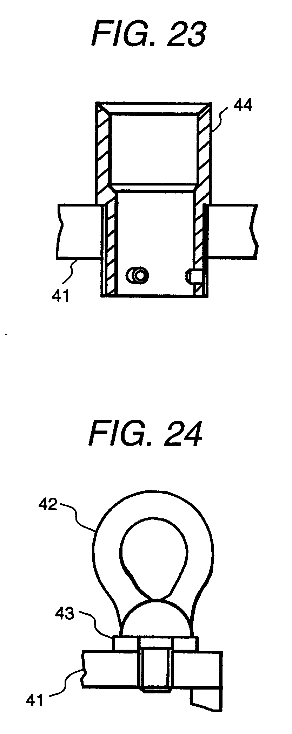

FIG.21 is a cross-sectional view showing the core support plate 52, and the fuel support pieces 44 shown in FIG.22 and the peripheral fuel support pieces shown in FIG.23 are arranged on the core support plate. FIG.24 is an enlarged view showing the portion of XV of FIG.21. Eye bolts 42 are provided in the core support plate 41 through washer 43. The components of FIG.22 to FIG.24 were manufactured using the aforementioned ultra-fine grain austenitic steel according to the present invention. Further, core support plate pins attached to the core support plate 41 and washers 43 of FIG. 24 were also manufactured using the ultra-fine grain austenitic steel according to the present invention.

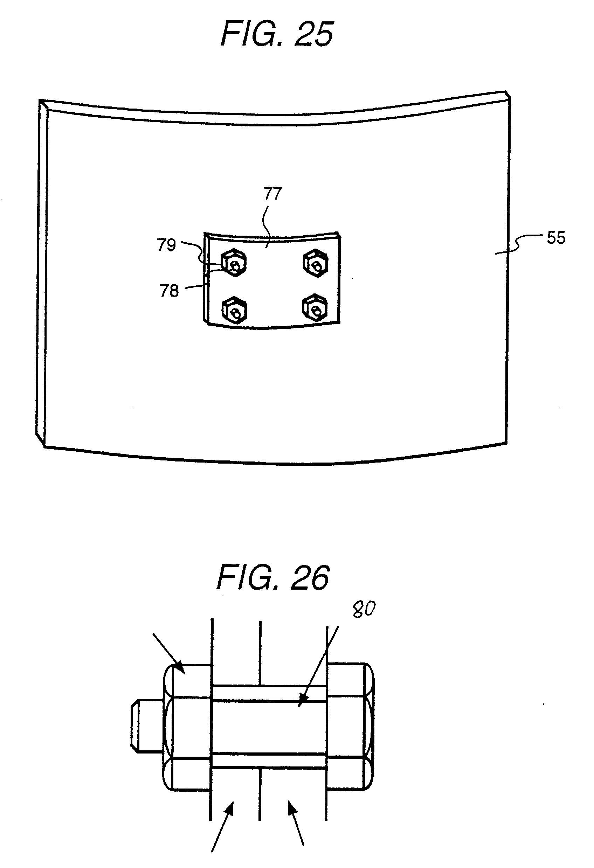

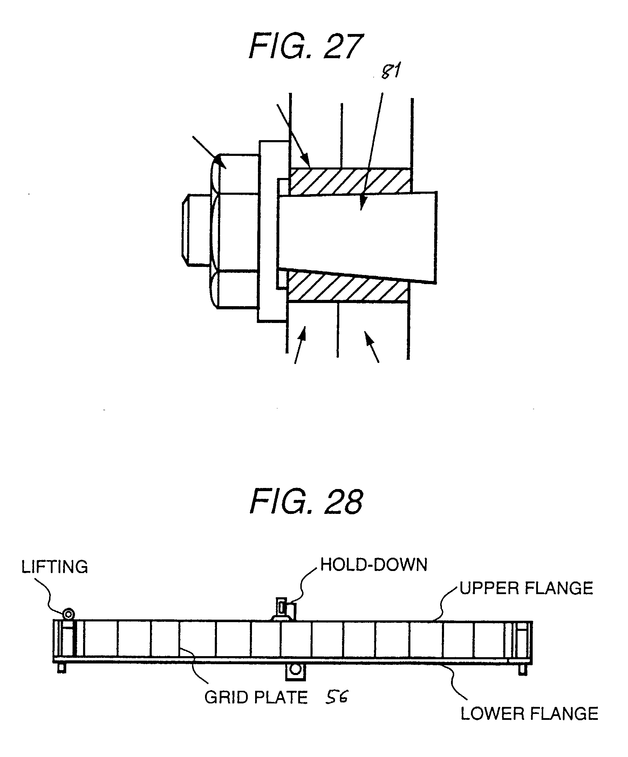

Further, FIG.25 shows a repairing method of various components in a core of a boiling water reactor, the repairing method using a clamp 77 for mechanically protecting a portion including a defected portion, for example, a portion of a stress corrosion crack formed in the core shroud 55, repairing bolts 78 and repairing nuts 79. FIG.26 is a cross-sectional view showing a repaired portion using a taper-less bolt 80. FIG.27 is a cross-sectional view showing a repaired portion using a tapered bolt 81. The tapered bolt 81 fixes the core shroud 55 and the clamp 77 through a sleeve 82 with slit. The above bolts and the nuts were manufactured in Embodiment 1 using the ultra-fine grain austenitic steels No.2, No.5 and No.17 according to the present invention.

The aforementioned materials manufactured through the method according to the present invention were irradiated with neutrons up to $1 \times 10^{22}$ n/cm² (>1MeV) in neutron dose under a simulated condition produced in a boiling water reactor. A tensile test (strain rate : $\sim 10^{-4}$/s) was carried out at room temperature using non-materials and the irradiated materials. Increase in yield strength and decrease in elongation, typical indexes of irradiation degradation of material, for the ultra-fine grain sized austenitic steel according to the present invention were substantially small compared to a conventional practicable steel type 316L. Further, among the steels according to the present invention, the materials added with Ti, Zr, Nb showed better resistivity against radiation damage. Table 7 shows yield strength and elongation percentage before and after irradiation for the steels No.2, No.5 and No.17 in Table 1 according to the present invention and the conventional practicable steel type 316L.

Table 7

| upper row: non-irradiated steel<br>lower row: irradiated steel | | |
|---|---|---|
| No. (grain size: d) | Yield strength (MPa) | Elongation percentage (%) |
| 2<br>(d=82 nm) | 762 | 15 |
| | 785 | 13 |
| 5<br>(d=70 nm) | 780 | 12 |
| | 801 | 10 |
| 17<br>(d=85 nm) | 761 | 17 |
| | 770 | 16 |
| Stainless steel 316L<br>(d=20 μm) | 210 | 60 |
| | 1100 | 0.4 |

It is important to use a material having a high resistivity against radiation damage for a member which is used at a position suffering a neutron irradiation as high as radiation dose of $1 \times 10^{22}$ n/cm$^2$ as described above, suffers a high stress as a bolt or a nut, and cannot be directly observed on its surface from the outside. It is necessary that the member is made of a material having a similar to or nearly the same composition which is used to form structures around the member in order to make the electrical potentials in a high temperature pure water equal. Further, since a large amount of grain boundaries contained in the ultra-fine grain sized austenitic steel serve as places for distinguishing irradiation defects, accumulation of irradiation defects inside the mother phase can be suppressed, and therefore suppression effects of so-called irradiation brittleness and irradiation creep are large.

Although bolts and nuts were manufactured in the embodiment, it is very effective to use the same material of the ultra-fine grain sized austenitic steel for the grid plates 35 of the upper grid plate and the core support plate 52. Since a large member can be manufactured by the hot isostatic sintering method, all the members of various in-core structures shown in FIG.15 to FIG.27 can be manufactured by selecting compositions corresponding to kinds of the members.

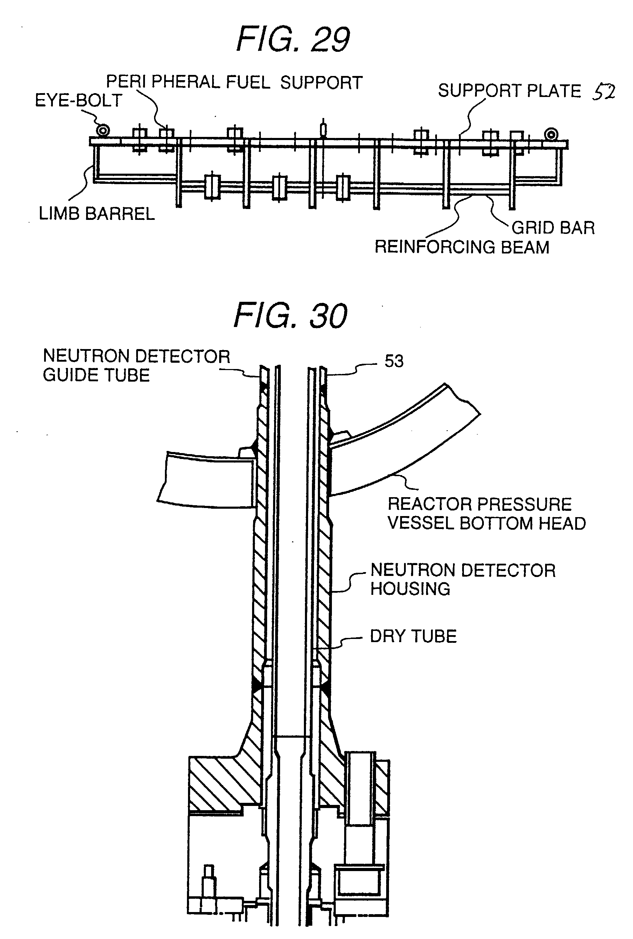

FIG.28 is a cross-sectional view showing a cross section of the disk-shaped upper grid plate 56, and FIG.29 is a cross-sectional view showing a cross section of the disk-shaped core support plate 52. These structure were also manufactured by using the alloy No.5 shown in Table 1 and welding plates obtained through the method of hot rolling and heat treatment shown in Embodiment 1.

FIG.30 is an enlarged cross-sectional view showing the neutron detector tube 53. The neutron detector tube 53 is welded to be connected to a housing which is welded to connect to the bottom head of the reactor pressure vessel. In this embodiment, the neutron detector tube 53 was also manufactured by using the alloy No.5 shown in Table 1 and using a seamless tube obtained through the method of hot rolling and the final heat treatment described in Embodiment 1.

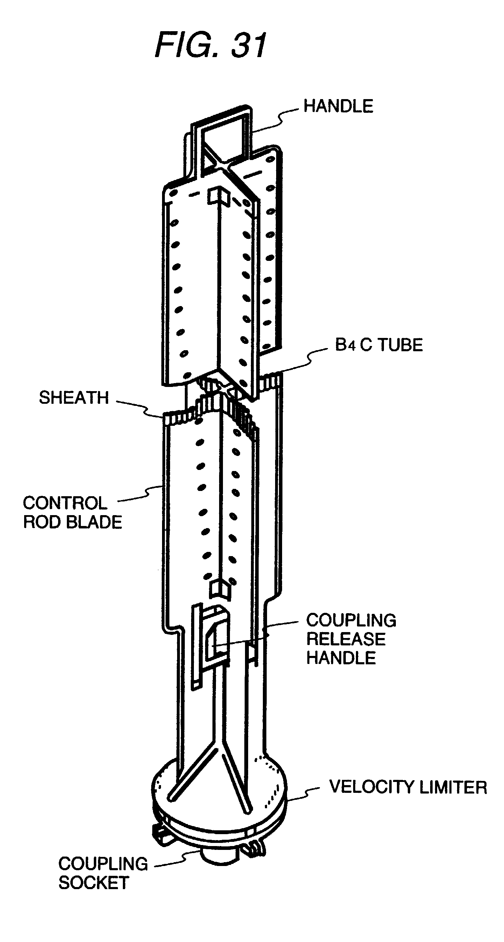

FIG.31 is a perspective view showing a control rod. In this embodiment, the alloy No.5 shown Table 1 was used for the sheath and the B$_4$C tubes. The B$_4$C tubes were obtained by manufacturing a raw tube by hot extruding and then repeating cold rolling using a Pilger mill and annealing. The sheath was obtained by repeating cold rolling and annealing to make a thin plate and then welding the thin plate.

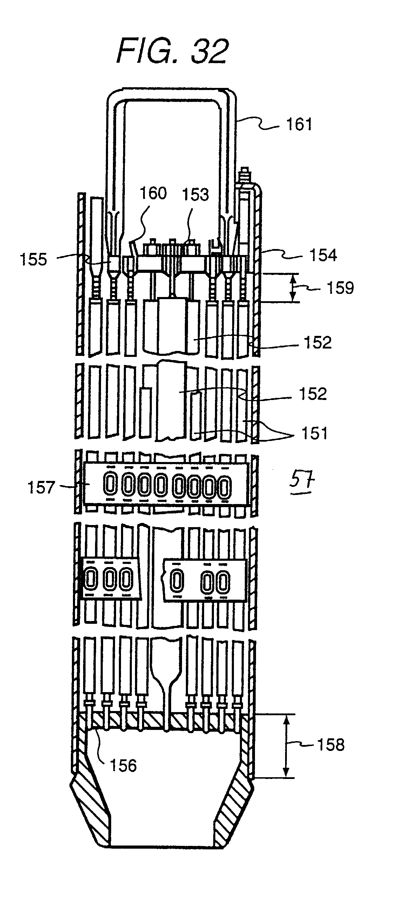

FIG.32 is a partial cross-sectional view showing the fuel assembly 57. The fuel assembly 57 is mainly composed of fuel rods 151, a water rod 152, a channel box 154, an upper tie plate 155, a lower tie plate 156, spacers 157 and a handle 161, and a lot of bolts and nuts for jointing are used. The alloy according to the present invention may be used for these structural parts. In Fig.32, numeral 153 is a water rod fixing screw, 158 channel box coupling margin, 159 fuel rod expansion margin, and 160 fuel rod through hole. The structural materials for the handle, the upper and lower tie plates are subjected to solid-solution process after hot forging, the thin plates of the channel box and the spacer are manufactured by being subjected solid-solution process after hot forging and repeating cold rolling and annealing, and the thin thickness tubes of the fuel cladding and the water rod are manufactured using Pilger mill.

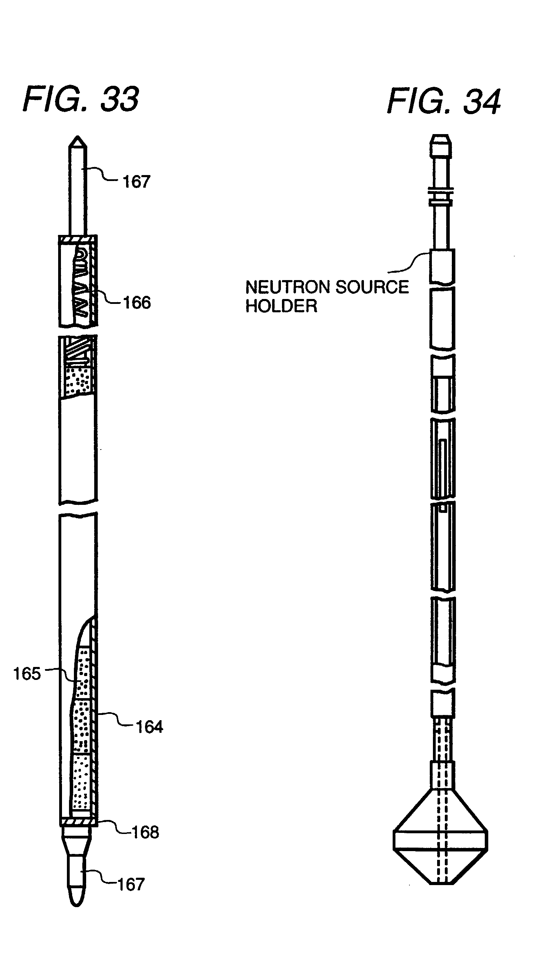

FIG.33 is a partially cut-away view of a fuel rod. The alloy according to the present invention may be used for a cladding tube 164 and end caps 167.

FIG.34 is a partially cut-away view of a neutron source pipe. The neutron source pipe was manufactured using the alloy No.5 shown in Table 1. A seamless tube manufactured by hot working was used for the pipe portion of the pipe, and the upper rod portion and the lower thick thickness portion were obtained through hot forging and heat treatment as the same manufacturing process as in Embodiment 1. Each of the jointing portions was welded by electron beam welding.

Table 8 shows main specification of the BWR electric power generating plant constructed as described above. According to the embodiment, it can be expected that each of the members constructed using the alloy in accordance with the present invention can be used for 30 years without replacement, and further can be used 40 years without replacement by performing inspection. The reactor temperature is 288°C, the scheduled inspection is repeated to be performed within 50 days per inspection, preferably within 40 days per inspection, more preferably in 30 days per inspection after 12-month operation, the plant operability is 85% or more, preferably 90% or more, more preferably 92%, and the heat efficiency is 35%.

Embodiment 6

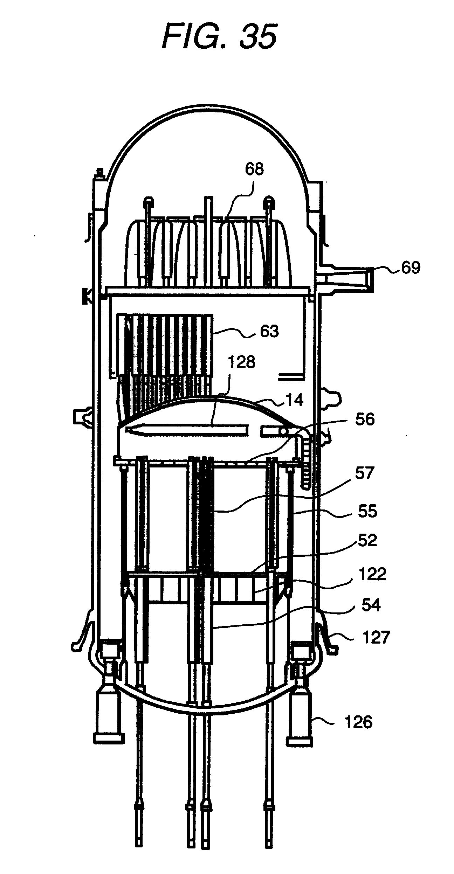

FIG.35 is a cross-sectional view showing a reactor of an advanced boiling water reactor (ABWR) electric power plant. In Fig.35, numeral 52 is a core support plate, 54 control rod, 55 core shroud, 56 upper grid plate, 57 fuel assembly, 63 steam separator, 68 steam dryer and 126 internal pump.

A reactor pressure vessel is a main component of a nuclear electric power generating plant. In an ABWR, a nozzle portion for mounting an internal pump is of an optimum shape of sleeve type so that rotating function of the internal pump is not affected even when change in temperature and pressure occurs in the reactor pressure vessel, and heat transfer to the motor portion is small enough.

Core internals are designed so as to reduce effect of flow inducing vibration due to employing the internal pump system.

Accuracy of core flow rate measurement is tried to be maintained including experimental qualification in taking partial operation of of the internal pumps into consideration. Measurement of steam flow rate to the turbine is performed by a venturi-tube structure provided in the main steam nozzle portion of the reactor pressure vessel.

The RPV (reactor pressure vessel) forms a pressure boundary of coolant and has a function to contain and maintain the core and the pressure vessel internal structures.

A conventional RPV contains 764 fuel assemblies, jet pumps and internal structures, and the inner diameter of the RPV is about 6.4 m. In the other hand, In the ABWR RPV, number of containing fuel assemblies is increased to 872 and a space for handling the internal pumps is provided. Therefore, the inner diameter of the ABWR RPV is about 7.1 m.

The height of the conventional RPV is nearly 22 m. In the other hand, the height of the ABWR RPV is designed in nearly 21 m due to the following reasons (a) to (d).

(a) By employing a high efficiency steam separator, length of the stand pipe is shortened.
(b) By employing an FMCRD, the control rod velocity limiter is eliminated.
(c) By changing the constructions of the top head and main flange, the height of the top head is lowered.
(d) By changing the shape of the bottom head, height of the bottom head is shortened.

The shape of the bottom head is changed from the conventional semi-sphere-shape to a dish-shape in order to provide a space necessary for installing the internal pumps in the bottom of the pressure vessel accompanied by employing the internal pumps and to provide a flow passage for circulating cooling water. Further, the internal pump is designed so as to lessen number of welding lines by forming the housing of the internal pump in a one-piece forged structure.

The supporting skirt is designed in a truncated cone shape attached to the cylindrical body of the pressure vessel in order to provide a necessary space for handling the internal pumps and to install internal pump heat exchanges inside a pedestal room.

Employing the internal pumps eliminates coolant re-circulation inlet and outlet nozzles which are provided in the conventional plant. There is no large diameter nozzle in a portion of the cylindrical body of the pressure vessel below the core region, and consequently it is no need to assume a large loss of coolant accident caused by a large diameter pipe rupture.

In the conventional plant, a flow limiter is installed in a down flowing portion of the main steam pipe upstream of an isolation valve. By installing the flow limiter in the main steam nozzle, the safety margin to a main steam pipe rupture accident is improved and the reactor containment space is optimized.

Table 8 shows main items of the core internal structures in comparing with those of the BWR in Embodiment 5.

The core internal structures are installed inside the RPV and required to be of sufficient integrity and reliability by their nature such as supporting the core, forming coolant flow passage, steam-water separation function of hot water and steam generated in the core, and maintaining core injection flow passage for cooling water under a hypothetical accident.

Table 8

| Item | | ABWR | BWR |
|---|---|---|---|
| Electric Output | | 1350MW | 1100MW |
| Thermal Output | | 3926MW | 3293MW |
| Vessel Dome Pressure | | 7.17MPa $(73.1kgf/cm^2)[abs]$ | 7.03MPa $(71.7kgf/cm^2)[abs]$ |
| Main Steam Flow | | 7480t/h | 6410t/h |
| Feed Water Temperature | | 215°C | 215°C |
| Rated Core Flow | | $52\times10^6$kg/h | $48\times10^6$kg/h |
| Fuel Assemblies | | 872 | 764 |
| Control Rods | | 205 | 185 |
| Average Power Density | | 50.5kW/l | 50.0kW/l |
| Pressure Vessel | In. Dia. | 7.1m | 6.4m |
| | Height | 21.0m | 22.2m |
| Recirculation System (Number of Pumps) | | Internal Pump (10) | External pump (2) |
| Control Rod Drive | Normal | Fine Motion Electric Motor | Hydraulic Drive |
| | Scram | Hydraulic Drive | Hydraulic Drive |
| Emergency Core Cooling System | | Automatic Depressurizing Sys High Pressure Sys (3 systems) Low Pressure Sys (3 systems) | Automatic Depressurizing Sys High Pressure Sys (1 system) Low Pressure Sys (4 systems) |
| Residual Heat Removal | | 3 systems | 2 systems |
| Reactor Containment | | Reinforced Concrete with Lining | Free-standing Steel |
| Turbine | | TC6F-52(Tow-stage Reheat) | TC6F-41/43(No Reheat) |
| Steam Separator (number) | | Double Tube, Three Stage (349) | Triple Tube, Two Stage (225) |
| Feed Water Sparger Thermal Sleeve | | Welded Double Thermal Sleeve | Welded Single Thermal Sleeve |
| High Pressure Core Water Injection Sparger | | Injection Type | Spray Type |
| Low Pressure Core Water Injection Sparger | | Down-comer Injection Type | In-shroud Injection Type |
| Upper Grid Plate | | One-piece Cutting | Grid Plate Fitting |
| Core Support Plate | | Cross Reinforcing Beam | Parallel Reinforcing Beam |
| In-core Stabilizer | | 2 Stage, Fixed Shroud | Single Stage, Free Shroud |
| Control Rod | | Without Velocity Limiter, Bayonet Coupling Type | With Velocity Limiter, Spud Coupling Type |
| Shroud Support Leg | | height: 21.7inches 10 legs (arranged between internal pumps) | height: 57.5inches 12 legs |
| Maximum neutron irradiation | | $4\sim5\times10^{22}$ n/cm$^2$ | $1\times10^{22}$ n/cm$^2$ |
| Design Plant Life | | 30 years or more | 30 years or more |
| Average Output (Availability) | | 85% or higher | 85% or higher |

13

Table 8   (continued)

| Item | ABWR | BWR |
|---|---|---|
| Operating Period | 12 months/operation | 12 months/operation |
| Scheduled Inspection Period | 50 days/inspection | 50 days/inspection |

Table 9 shows Main plant specifications of the steam turbine and generator systems of the ABWR and the BWR. Comparing the 50 Hz systems, the thermal output of the ABWR is 19.2% larger than that of the BWR, whereas the electric output is 23.3% larger than that of the BWR. Therefore, it shows that the ABWR is a higher efficiency plant.

There is no need to say that it can be possible to use the sintering steel having average grain size of 10 to 600 nm described in Embodiments 1 to 4 to bolts and nuts for fastening each of the core internal members as the same as in Embodiment 5. In addition to this, the sintered steel may be applied to the other core internal structure described in Embodiment 5, as the same sa the aforementioned embodiment.

Table 9

| Item | | ABWR Plant | BWR Plant | |
|---|---|---|---|---|
| | | | A | B |
| 1.Reactor | Thermal output | 3926MW | 3293MW | 3293MW |
| | Feed Water Temperature | 215°C | 215.5°C | 215.6°C |
| 2.Turbine | Type | TC6F-52 | TC6F-41 | TC6F-43 |
| | Electric Output | 1356MW | 1100MW | 1137MW |
| | Main Steam Pressure | 6.79MPa (abs) | 6.65MPa (abs) | 6.65MPa (abs) |
| | Rotating Speed | 1500 r/min | 1500 r/min | 1800 r/min |
| 3. Condenser | Vacuum | 5.07kPa (abs) | 5.07kPa (abs) | 5.07kPa (abs) |
| | Cooling Tube Material | Titanium | Titanium | Titanium |
| | Installed Heater | 4 low pressure | 4 low pressure | 4 low pressure |
| 4.Moisture Separator and Reheater | Type | 2 Stage Reheater | No Reheat | 2 Stage Reheater |
| 5.Main steam system | Main steam Inlet | Side Entry | Front Entry | Front Entry |
| 6. Condensed Water Feed | Feed Pump | TDRFP×2 MDRFP×1 | TDRFP×2 MDRFP×2 | MDRFP×2 TDRFP×2 |
| | Heater Drain | Pump-up | Cascade | Cascade |
| 7. Generator | Type | TFLQQ·KD | TFLQQ·KD | TFLQQ·KD |
| | Output | 1540MVA | 1300MVA | 1280MVA |
| | Pole Number | 4 | 4 | 4 |
| | Power Factor | 0.9 | 0.9 | 0.9 |

ABWR(Advanced Boiling Water Reactor)
BWR(Boiling Water Reactor)
TDRFP(Turbine Driven Feed-water Pump)
MDRFP(Motor Driven Feed-water Pump)

Embodiment 7

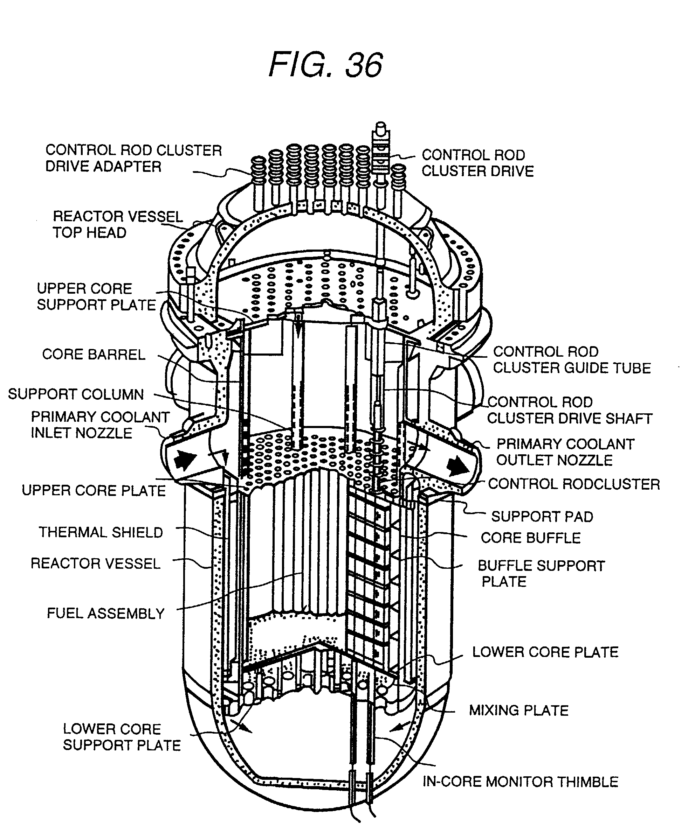

FIG.36 is a perspective view showing a core structure of a pressurized water reactor (PWR).

There are a nuclear reactor, primary cooling circuits and auxiliary systems as the nuclear related systems, and the reactor is composed of a nuclear pressure vessel and a core, in-core structures, control rod clusters contained in the nuclear pressure vessel and control rod driving units.

The core is a nearly cylindrical shaped portion in which a cluster of fuel assemblies are fixed by a top and a bottom core plates and a baffle (shroud) as a whole.

Coolant inlet and coolant outlet nozzles and a low pressure injection nozzle are provided in the reactor pressure in a level far higher than the top of the core so that the core may be always immersed in the coolant.

Primary coolant flowing into the nuclear reactor pressure vessel through the nozzles flows downward in an annular portion between a core barrel structure and the nuclear reactor vessel, and turns to flow upward at the bottom of the nuclear reactor vessel and enters into the bottom of the core in an uniform flow distribution through a mixing plate. The high temperature coolant heated by absorbing heat generated by fission of the nuclear fuel is transmitted to steam generators through nozzles provided in the upper portion of the nuclear reactor vessel.

Reactivity of the core is controlled by the following two methods.

(i) Control of comparatively fast reactivity change such as starting-up, scram, load change is performed by using the control clusters.

(ii) Control of slow reactivity change such as compensation of reactivity decrease due to fuel burn-up, reactivity change accompanied by change in amounts of Xe and Sm, reactivity change caused by temperature change from room temperature to a operating temperature is performed by adjusting boron concentration solved in the primary coolant.

The fuel assemblies are formed in a nearly cylinder-shape as a whole using the top and the bottom core plates and the baffle. Number of the fuel assemblies is determined depending on the output power of the core. The relationship between electric power output and number of the fuel assemblies is 121 assemblies for 300 to 550 MWe, 157 to 177 assemblies for 800 MWe, and 193 to 249 assemblies for 1100 MWe.

The weight of the core is supported by a flange of the nuclear reactor vessel through the bottom core support plate, the core barrel, the top core plate. Vibration of the core portion in the lateral direction is suppressed by plural keys provided on the side surface of the bottom end of the core barrel and side corresponding key grooves arranged in the nuclear reactor vessel.

The core can be divided into three concentric zones each of which has nearly the number of the fuel assemblies. In a case of initial fuel loading, different enrichments of the fuel assemblies are manufactured, and higher enriched fuel assemblies are loaded in the peripheral zone. In a case of fuel exchange, fuel assemblies in the central zone are unloaded, fuel assemblies in the two outer zones are moved inner-ward, and new fuel assemblies are loaded in the peripheral zone. This fuel exchanging method is called as outer-to-inner type three cycle method. There is another fuel exchange method in which high burn-up fuel assemblies in the central zone are unloaded, fuel assemblies in the peripheral zone are loaded in the central zone and new fuel assemblies are loaded in the peripheral zone. this method is so-called checker board type three cycle method.

By these methods, the power distribution in the core can be flattened, and accordingly the power density can be increased and the average burn-up of the fuel can be increased, which can decrease fuel cost. In the PWR, fuel exchange period is one year or longer though it depends on the kind of fuel.

Unloaded burn-up of the fuel assembly has been increased, and there are some fuel assemblies capable of attaining 33000 MWD/MT (maximum burn-up is 50000 MWD/MT).

In this embodiment it is also possible to use the sintered steel having average grain size of 10 to 600 nm described in Embodiments 1 to 5 as the core structural material, as the same as in Embodiment 6. As the components employing the core structural material, there are the top core support plate, the core barrel, the top core plate, fuel assembly as the same as Embodiment 5, and the bottom core support plate, the bottom core plate, the baffle support plate, the core baffle, the control rod cluster, the support pad, the control rod cluster guide tube, the control rod cluster drive shaft. Further, it is particularly effective to apply the sintered steel to bolts and nuts for fastening each of the core internal members.

According to the embodiment, it is possible to attain the same values of plant operating life, availability, operating period, scheduled inspection period and thermal efficiency as those of Embodiment 5.

Embodiment 8

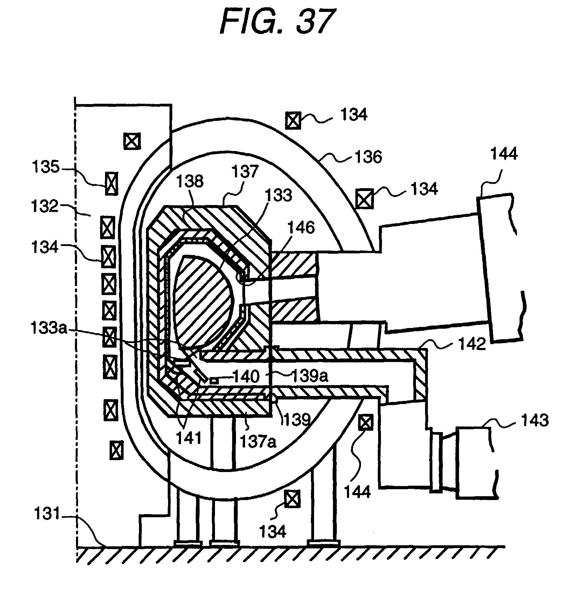

FIG.37 is a cross-sectional view showing an outline of a torus nuclear fusion reactor using the steel according to the present invention. The nuclear fusion reactor comprises poloidal field coils 134 and diverter coil 135 for heating and controlling a plasma 133, toroidal field coils 136 installed above a base 131, a hollow torus vacuum vessel 137 inside the toroidal field coils 136, a blanket 138 for exchanging heat by being supplied with a coolant such as helium installed inside the vacuum vessel 137, a shield cylinder 139 for introducing deuterium or tritium as a fuel inside the blanket 138 to generate the plasma 133 connected to the bottom portion 137a of the vacuum vessel 137, diverters 141 supported by a cooling pipe header 140 and connected to the diverter coil 135 installed inside the shield cylinder 139, a part of the plasma 133a (impurities such as He) being extracted from the plasma 133 to the divertor 141, an exhausting pump 143 installed at an opening port 139a of the shield cylinder 139 through an exhausting pipe 42, and a neutral beam injection apparatus 144 installed in the vacuum vessel 137 above the exhausting pipe 142.

In the nuclear fusion reactor plant, deuterium or the like is contained inside the vacuum vessel 137 having a water cooling structure and current is supplied to the poloidal field coils 134, the diverter coil 135 and the toroidal field coils 136 to change the deuterium or the like in the vacuum vessel 137 to a plasma 133, and at the same time neutral particles are injected into the vacuum vessel 137 using the neutral beam injection apparatus 144 to secondarily heat the plasma 133. Thermal energy generated in the plasma is exchanged with the a coolant flowing inside the blanket 38, the coolant exchanged the heat is extracted outside the apparatus, and then a turbine, for example, is driven by the heat. In the other hand, the impurities produced by spattering of the plasma 133 inside the vacuum vessel 137 not only decreases plasma generating efficiency but also becomes a cause to damage the surface of the vacuum vessel 137. In order to remove the impurities causing the damage, there is provided the diverter 141 onto which the impurities hit to be removed. A first wall 146 is provided in the inner side of the blanket 138. The first wall 146 is constructed by metal-jointing ceramic tile 148 on a metallic base 147.

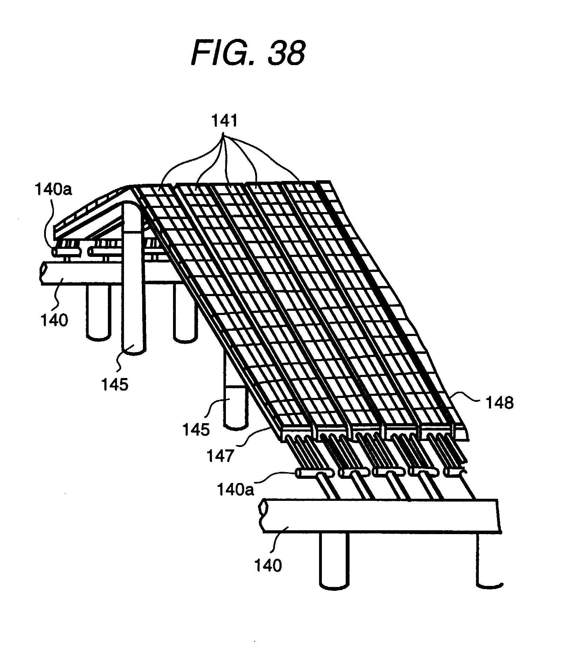

FIG.38 is a perspective view showing an outline of the divertor 141. Referring to the figure, the diverter 141 is affected by a large heat load from the plasma and a large electro-magnetic force due to eddy current generated in the diverter 141. The diverter 141 is composed of a plurality of long plates aligned in the torus direction and is supported by the cooling header 140 and the sub-header 140a and a support rack 145 attached on the bottom surface of the diverter 141. A plurality of elements of the diverter 141 compose one block and a plurality of the blocks arranged in the torus direction compose the diverter 141. Each of the blocks is constructed by jointing ceramic tile 148 on a metallic base 147. It is preferable that the ceramic tile 148 has a thermal conductivity higher than 0.3 cal/cm·sec·°C. Preferable material for the tile is a sintered material of SiC containing Be or a Be chemical compound by 0.2 to 2 weight %, or a sintered material of AlN containing a Be chemical compound by 0.2 to 2 weight %.

In this embodiment, all of the diverter 141, the vacuum vessel 137 and the first wall 146 are irradiated by various particle beams leaking form the plasma and have constructions to contact with cooling water, that is, contact with a high temperature water. By manufacturing the metallic bases of these structures using the steel No.5 shown in Table 1, it is possible to decrease the sensitivity against interglanular hydrogen crack under neutron irradiation and to improve resistivity against irradiation embrittlement.

These structures are made of the steel shown in Embodiment 1 which is all austenite phase and is manufactured through hot rolling, and repeating cold rolling and annealing, and then solid-solution treatment.

The austenitic steel according to the present invention is applied to a strength member used under an environment in which grain boundaries generally become a cause of deterioration of the material. Since the austenitic steel according to the present invention is high in corrosion resistivity and strength, there is an effect in that safety and reliability of the product employing the austenitic steel can be substantially improved. Further, the austenitic steel according to the present invention is applied not only to a nuclear reactor core structural member but also to a nuclear fusion reactor structural member which suffers radiation damage and is used under a water cooling environment or a hydrogen containing environment. Since the austenitic steel according to the present invention is high in radiation damage resistivity, there is an effect in that safety and reliability of the product employing the austenitic steel can be substantially improved.

## Claims

1. A high corrosion resistant and high strength austenitic sintered steel containing C of not more than 0.1 %, Si of not more than 1 %, Mn of not more than 2.0 %, Ni of 9 to 30 %, Cr of 14 to 20 %, optionally Mo of not more than 3 % in weight and/or optionally at least one kind of element selected from the group of Ti of not more than 1.0 %, Zr of not more than 2.0 %, Nb of not more than 1.0 % in weight, total weight percentage of said selected elements being not more than 2.0 % when more than one of the elements are selected, and balance of Fe and inevitable impurities including P and S, an average crystal grain size of said steel being not larger than 1 μm, and the austenite phase representing not less than 90 % in volume at room temperature.

2. A high corrosion resistant high strength austenitic sintered steel according to claim 1, which contains P of not more than 0.045 % and S of not more than 0.03 %, and has an average crystal grain size of said austenite phase of 10 nm to 1000 nm.

3. A high corrosion resistant and high strength austenitic sintered steel according to claim 1, the 0.2 % yield strength Y (MPa) of said austenitic steel at room temperature being within a range of values determined by the following equations (1) and (2) using an average crystal grain size d (nm), said average crystal grain size being not larger than 1000 nm;

$$Y=-177\log d+936 \qquad \text{Equation (1)}$$

$$Y=-240\log d+1233 \qquad \text{Equation (2).}$$

4. A high corrosion resistant and high strength austenitic sintered steel according to claim 1, the 0.2 % yield strength Y (MPa) of said austenitic steel at room temperature being within a range of values determined by the following equations (3) and (4) using an elongation percentage $\delta$ (5), said average crystal grain size being not larger than 1000 nm;

$$Y=-290\log\delta+720 \qquad \text{Equation (3)}$$

$$Y=-670\log\delta+1375 \qquad \text{Equation (4).}$$

5. A method of manufacturing a high corrosion resistant and high strength austenitic sintered steel of claim 1, which comprises the steps of producing a processed powder having a crystal grain size smaller than 20 nm and deformation-induced martensite transformation phase by mechanically grinding or alloying a powder at a temperature not higher than 100 °C for 30 to 100 hours using an attriter or a ball mill, said powder being an atomized powder of a steel powder containing C of not more than 0.1 %, Si of not more than 1 %, Mn of not more than 2.0 %, Ni of 9 to 30 % and Cr of 14 to 20 % in weight or a steel powder containing C of not more than 0.1 %, Si of not more than 1 %, Mn of not more than 2.0 %, Ni of 9 to 30 %, Cr of 14 to 20 % in weight and at least one kind of Mo of not more than 3 %, Ti of not more than 1.0 %, Zr of not more than 2.0 %, Nb of not more than 1.0 % in weight or more than one of elements Ti, Zr, Nb of not more than 2.0 %, or a mixed powder satisfying paid composition as a whole; and performing a hot densifying treatment, or a hot solidifying treatment and a final hot working treatment at a temperature within a range of 700 °C to 1050 °C following said hot densifying treatment through hot isostatic sintering or hot extruding working to said processed powder at a temperature within a range of 700 °C to 1050 °C so that said densified steel contains austenite phase of not less than 90 % in volume at room temperature, an average crystal grain size of said phase being 10 nm to 1000 nm.

6. A method according to claim 5, wherein said processed powder has a crystal grain size smaller than 15 nm.

7. A nuclear reactor internal member made of an austenitic sintered steel as claimed in claim 1.

8. A fastening member made of an austenitic sintered steel as claimed in claim 1.

9. The use of an austenitic steel as claimed in claim 1 for high corrosion resistant and high strength structural member being contacted to water and irradiated with neutrons.

10. The use of an austenitic steel as claimed in claim 1 for making at least one of structural parts of a nuclear reactor, such as a neutron source pipe (51), a reactor core support plate (52), an in-core flux monitor tube, control rod guide tubes (75), a shroud (55), an upper grid plate (56), fuel cladding tubes and channel boxes.

11. The use of an austenitic steel as claimed in claim 1 for making, in a nuclear electric power generating plant in which a steam turbine is rotated by thermal output power obtained from nuclear fuel contained in a nuclear reactor pressure vessel, an electric power generator being driven by rotation of said steam turbine, electric power being obtained thereby, wherein a thermal output of said nuclear reactor is not smaller than 3200 MW, a pressure inside the reactor vessel being not lower than 7.0 MPa, a water temperature of the reactor being lower than 288 °C, said electric output power being smaller than 1100 MW, at least one of structural components of a neutron source pipe (51), a reactor core support plate (52), an in-core flux monitor tube, control rod guide tubes (75), a shroud, an upper grid plate (56) and an upper grid plate provided inside said nuclear reactor pressure vessel having a capability of being used for more than 30 years without being replaced, an availability factor of said plant being not lower than 85 %.

12. The use according to claim 11, wherein a thermal output of said nuclear reactor is not smaller than 4300 MW, and a scheduled inspection time period per inspection of said plant after 12-month operation is performed within 50 days.

13. The use of an austenitic steel as claimed in claim 1 for making at least one of structural components of a nuclear fusion reactor having a vacuum vessel (137) with a water cooling structure, a diverter (141) with a water cooling structure and ceramics tiles (148) in plasma side provided, and a first wall (146) with a water cooling structure and ceramics tiles (148) in the plasma side.

**Patentansprüche**

1. Hochkorrosionsbeständiger und hochfester austenitischer gesinterter Stahl, der nicht mehr als 0,1 % C, nicht mehr als 1 % Si, nicht mehr als 2,0 % Mn, 9 bis 30 % Ni, 14 bis 20 % Cr, wahlweise nicht mehr als 3 Gew.% Mo und/ oder wahlweise wenigstens eine Elementart, die aus der Gruppe von nicht mehr als 1,0 Gew.% Ti, nicht mehr als 2,0 Gew.% Zr, nicht mehr als 1,0 Gew.% Nb gewählt ist, wobei der Gesamtgewichtsprozentsatz dieser gewählten Elemente nicht mehr als 2,0 % ist, wenn mehr als eines der Elemente gewählt werden, und Rest Eisen und unvermeidliche Verunreinigungen einschließlich P und S enthält, wobei eine Durchschnittskristallkorngröße des Stahls nicht über 1 μm ist und die Austenitphase bei Raumtemperatur nicht weniger als 90 Vol.% bildet.

2. Hochkorrosionsbeständiger und hochfester austenitischer gesinterter Stahl nach Anspruch 1, der nicht mehr als 0,045 % P und nicht mehr als 0,03 % S enthält und eine Durchschnittskristallkorngröße der Austenitphase von 10 nm bis 1000 nm hat.

3. Hochkorrosionsbeständiger und hochfester austenitischer gesinterter Stahl nach Anspruch 1, wobei die 0,2 %- Streckgrenze Y (MPa) des austenitischen Stahls bei Raumtemperatur innerhalb eines Bereichs von Werten ist, die durch die folgenden Gleichungen (1) und (2) bei Verwendung einer Durchschnittskristallkorngröße d (nm), die nicht über 1000 nm ist, bestimmt werden:

$$Y = -177 \log d + 936 \qquad \text{Gleichung (1)}$$

$$Y = -240 \log d + 1233 \qquad \text{Gleichung (2).}$$

4. Hochkorrosionsbeständiger und hochfester austenitischer gesinterter Stahl nach Anspruch 1, wobei die 0,2 %- Streckgrenze Y (MPa) des austenitischen Stahls bei Raumtemperatur innerhalb eines Bereichs von Werten ist, die durch die folgenden Gleichungen (3) und (4) bei Verwendung eines Dehnungsprozentsatzes 6 (5), wobei die Durchschnittskristallkorngröße nicht über 1000 nm ist, bestimmt werden:

$$Y = -290 \log \delta + 720 \qquad \text{Gleichung (3)}$$

$$Y = -670 \log \delta + 1375 \qquad \text{Gleichung (4).}$$

5. Verfahren zur Herstellung eines hochkorrosionsbeständigen und hochfesten austenitischen gesinterten Stahls nach Anspruch 1, das die Schritte der Erzeugung eines verarbeiteten Pulvers mit einer Kristallkorngröße unter 20 nm und einer verformungsinduzierten Martensitumwandlungsphase durch mechanisches Zerkleinern oder Legieren eines Pulvers bei einer Temperatur von nicht über 100°C für 30 bis 100 Stunden unter Verwendung eines Zerreibers oder einer Kugelmühle, welches Pulver ein zerstäubtes Pulver aus einem Stahlpulver ist, das gewichtsmäßig nicht mehr als 0,1 % C, nicht mehr als 1 % Si, nicht mehr als 2,0 % Mn, 9 bis 30 % Ni und 14 bis 20 % Cr enthält, oder aus einem Stahlpulver ist, das gewichtsmäßig nicht mehr als 0,1 % C, nicht mehr als 1 % Si, nicht mehr als 2,0 % Mn, 9 bis 30 % Ni, 14 bis 20 % Cr und wenigstens eine Art von gewichtsmäßig nicht mehr als 3 % Mo, nicht mehr als 1,0 % Ti, nicht mehr als 2,0 % Zr, nicht mehr als 1,0 % Nb oder nicht mehr als 2,0 % von mehr als einem der Elemente Ti, Zr, Nb enthält, oder aus einem gemischten Pulver ist, das insgesamt dieser Zusammensetzung genügt; und durch Ausführung einer Heißverdichtungsbehandlung oder einer Heißverfestigungsbehandlung und einer Endheißverformungsbehandlung bei einer Temperatur im Bereich von 700°C bis 1050°C nach der Heißverdichtungsbehandlung durch heißisostatisches Sintern oder Heißextrusionsverformen des verarbeiteten Pulvers bei einer Temperatur im Bereich von 700°C bis 1050°C aufweist, so daß der verdichtete Stahl nicht weniger als 90 Vol.% Austenitphase bei Raumtemperatur enthält, wobei die Durchschnittskristallkorngröße dieser Phase 10 nm bis 1000 nm ist.

6. Verfahren nach Anspruch 5, wobei das verarbeitete Pulver eine Kristallkorngröße unter 15 nm hat.

7. Kernreaktorinnenbauteil, das aus einem austenitischen gesinterten Stahl, wie im Anspruch 1 definiert, besteht.

8. Befestigungsbauteil, das aus einem austenitischen gesinterten Stahl, wie im Anspruch 1 definiert, besteht.

9. Die Verwendung eines austenitischen Stahls, wie im Anspruch 1 definiert, für ein hochkorrosionsbeständiges und hochfestes Bauteil, das mit Wasser kontaktiert und mit Neutronen bestrahlt wird.

10. Die Verwendung eines austenitischen Stahls, wie im An' spruch 1 definiert, zur Herstellung wenigstens eines der Bauteile eines Kernreaktors, wie z. B. eines Neutronenquellenrohres (51), einer Reaktorkernträgerplatte (52), eines Überwachungsrohres für den Fluß im Kern, von Regelstabführungsrohren (75), einer Ummantelung (55), einer oberen Gitterplatte (56), von Brennstoffplattierrohren und Kanalkästen.

11. Die Verwendung eines austenitischen Stahls, wie im Anspruch 1 definiert, zur Herstellung,

in einer nuklearen, elektrischen Strom erzeugenden Anlage, in der eine Dampfturbine durch Wäremausgangsleistung, die von in einem Kernreaktordruckbehälter enthaltenem Kernbrennstoff erhalten wird, rotiert, wobei ein elektrischer Stromgenerator durch Rotation der Dampfturbine angetrieben wird, wodurch elektrischer Strom erhalten wird, wobei der Wärmeausgang des Kernreaktors nicht unter 3200 MW ist, der Druck innerhalb des Reaktorbehälters nicht unter 7,0 MPa ist, die Wassertemperatur des Reaktors unter 288°C ist und die elektrische Ausgangsleistung unter 1100 MW ist,

wenigstens eines der Bauteile aus der Gruppe eines Neutronenquellenrohres (51), einer Reaktorkernträgerplatte (52), eines Überwachungsrohres für den Fluß im Kern, von Regelstabführungsrohren (75), einer Ummantelung, einer oberen Gitterplatte (56) und einer oberen Gitterplatte, vorgesehen im Kernreaktordruckbehälter mit einer Kapazität zum Gebrauch für mehr als 30 Jahre ohne Auswechslung, wobei der Verfügbarkeitsfaktor der Anlage nicht unter 85 % ist.

12. Die Verwendung nach Anspruch 11, wobei der Wärmeausgang des Kernreaktors nicht unter 4300 MW ist und eine planmäßige Inspektionszeitdauer je Inspektion der Anlage nach 12 Monaten Betrieb innerhalb von 50 Tagen vorgesehen wird.

13. Die Verwendung eines austenitischen Stahls, wie im Anspruch 1 definiert, zur Herstellung wenigstens eines der Bauteile eines Kernfusionsreaktors, der einen Vakuumbehälter (137) mit einem Wasserkühlungsaufbau, einen Diverter (141) mit einem Wasserkühlungsaufbau und Keramikziegeln (148) an der Plasmaseite und eine erste Wand (146) mit einem Wasserkühlungsaufbau und Keramikziegeln (148) an der Plasmaseite aufweist.

**Revendications**

1. Acier austénitique fritté de grande résistance mécanique et résistant à la corrosion ne contenant pas plus de 0,1 % C, pas plus de 0,1 % Si, pas plus de 2,0 % de Mn, de 9 à 30 % de Ni, de 14 à 20 % de Cr, facultativement, pas plus de 3 % en poids de Mo et/ou facultativement au moins un type d'élément choisi dans le groupe de Ti à pas plus de 1,0 % en poids, Zr à pas plus de 2,0 % en poids, Nb à pas plus de 1,0 % en poids, le pourcentage total en poids des éléments sélectionnés n'étant pas supérieur à 2,0 % en poids lorsqu'il est sélectionné plus d'un seul élément, et l'équilibre entre Fe et les inévitables impuretés y compris P et S, une granulométrie cristalline moyenne de cet acier étant supérieure à 1 µm, et la phase austénitique ne représentant pas plus de 90 % en volume à la température ambiante.

2. Acier austénitique fritté de grande résistance mécanique et résistant à la corrosion selon la revendication 1, qui ne contient pas plus de 2,0 % de Mn, pas plus de 1,0 % en poids de Nb ou plus d'un des éléments Ti, Zr, Nb de pas plus de 2,0 %ou une poudre mixte répondant à cette composition dans l'ensemble; et en effectuant un traitement de densification à chaud ou un traitement de solidification à chaud et un traitement à chaud final dans une plage de 700°C à 1050°C après ledit traitement de densification par frittage isostatique à chaud ou extrusion à chaud de la poudre traitée à une température dans une plage de 700 à 1050°C de sorte que l'acier densifié contient une phase austénitique non inférieure à 90% en volume à température ambiante, une granulométrie cristalline moyenne de ladite phase étant de 10nm à 1000 nm.

3. Acier austénitique fritté de grande résistance mécanique et résistant à la corrosion selon la revendication 1, la limite élastique Y (Mpa) de 0,2 % dudit acier austénitique à la température ambiante étant dans une plage de valeurs déterminée par les équations suivantes (1) et (2) en utilisant une granulométrie cristalline moyenne d (nm); ladite granulométrie moyenne n'étant pas supérieure à 1000 nm;

$$Y=-177logd+936 \qquad \text{Equation (1)}$$

$$Y=-240logd +1233 \qquad \text{Equation (2)}$$

4. Acier austénitique fritté de grande résistance mécanique et résistant à la corrosion selon la revendication 1, la limite élastique Y (Mpa) de 0,2 % dudit acier austénitique à température ambiante étant située dans une plage de valeurs déterminée par les équations suivantes (3) et (4) en utilisant un pourcentage d'allongement δ (5), ladite granulométrie cristalline moyenne n'étant pas supérieure à 1000 nm; ayant une granulométrie cristalline moyenne de ladite phase austénitique de 10 à 1000 nm.

5. Procédé de fabrication d'un acier austénitique fritté de grande résistance mécanique et résistant à la corrosion selon la revendication 1, lequel comprend les étapes consistant à produire une poudre traitée ayant une granulométrie cristalline inférieure à 20 nm et une phase de transformation martensite induite par déformation par meulage mécanique ou alliage d'une poudre à une température ne dépassant pas 100 °C pendant 30 à 100 heures en utilisant un triturateur ou broyeur à boulets, ladite poudre étant une poudre atomisée d'une poudre d'acier contenant C à pas plus de 0,1 % , Si à pas plus de 1 %, Mn à pas plus de 2,0 %, Ni de 9 à 30 % et Cr de 14 à 20 % en poids ou une poudre d'acier contenant C à pas plus de 0,1 %, si à pas plus de 1%, Mn à pas plus de 2,0 %, Ni de 9 à 30 %, Cr de 14 à 20 % en poids et au moins un type de Mo ne dépassant pas 3%, Ti ne dépassant pas 1,0 %, Zr ne dépassant pas 2,0 %, Nb ne dépassant pas 1,0 % en poids ou plus d'un des éléments de Ti, Zr, Nb de pas plus de 2,0 %, ou une poudre mixte répondant à la composition dans l'ensemble; et en effectuant un traitement de densification à chaud et un traitement de solidification à chaud par le biais d'un frittage isostatique ou d'une extrusion à chaud sur la poudre traitée dans une plage de 700°C à 1050 °C de sorte que ledit acier densifié contient une phase austénitique non inférieure à 90% en volume à température ambiante , une granulométrie cristalline moyenne de ladite phase étant de 10 nm à 1000 nm.

6. Procédé selon la revendication 5, dans lequel ladite poudre traitée a une granulométrie cristalline inférieure à 15 nm.

7. Elément interne de réacteur nucléaire réalisé à partir d'un acier austénitique fritté selon la revendication 1.

8. Elément de fixation réalisé à partir d'un acier austénitique selon la revendication 1.

9. Utilisation d'un acier austénitique selon la revendication destiné à un élément de structure à haute résistance mécanique et à la corrosion mis en contact avec de l'eau et irradié aux neutrons.

10. Utilisation d'un acier austénitique pour la réalisation d'au moins une des parties de structure d'une conduite de source de neutrons (51), d'une plaque de support de noyau de réacteur (52), d'un tube de moniteur de flux en noyau, de tubes de guidage de tiges de commande (75), d'une enveloppe (55), d'une plaque de grille supérieure (56), de tubes de revêtement de combustible et de caissons de canaux.

11. Utilisation d'un acier austénitique selon la revendication 1 destiné à réaliser dans une centrale nucléaire , dans laquelle une turbine à vapeur est mise en rotation par la puissance de sortie thermique obtenue à partir de combustible nucléaire contenu dans un réservoir sous pression d'un réacteur nucléaire, un générateur électrique étant entraîné par rotation de ladite turbine à vapeur, permettant ainsi d'obtenir la puissance électrique, la sortie thermique dudit réacteur nucléaire ne dépassant pas 3200 MW, la pression à l'intérieur du réservoir du réacteur n'étant pas inférieure à 7,0 Mpa, la température de l'eau du réacteur étant inférieure à 288°C, la puissance de sortie électrique étant inférieure à 1100 MW, au moins l'un des composants de structure d'une conduite de source de neutrons (51), une plaque de support de noyau de réacteur(52), un tube de moniteur de flux en noyau , des tubes de guidage de la tige de commande (75), une enveloppe, une plaque de grille supérieure (56) et une plaque de grille supérieure disposée dans le réservoir sous pression du réacteur nucléaire ayant une capacité d'utilisation supérieure à 30 ans sans nécessiter de remplacement et le facteur de disponibilité de cette installation n'étant pas inférieur à 85 %.

12. Utilisation selon la revendication 11, dans laquelle une sortie thermique dudit réacteur nucléaire n'est pas inférieure à 4300 MW et un intervalle d'inspection programmé pour ladite installation après une exploitation de douze mois intervient dans un laps de temps de jours.

13. Utilisation d'un acier austénitique selon la revendication 1 pour la réalisation d'au moins un des composants de structure d'un réacteur de fusion nucléaire comportant un réservoir de vide 137 avec une structure de refroidissement d'eau, un élément de déviation (14) avec une structure de refroidissement d'eau et des tuiles de céramique (148) prévues sur le côté plasma et une première paroi (146) avec une structure de refroidissement d'eau et des tuiles de céramique (148) sur le côté plasma.

EP 0 747 497 B1

## FIG. 1

PRACTICABLE AUSTENITIC STEEL

## FIG. 2

# FIG. 3

STEEL No.5

INTENSITY OF DIFFRACTED X-RAY

$t_{MA}$=100h

$t_{MA}$=60h

$t_{MA}$=25h

$t_{MA}$=10h

$t_{MA}$=5h

(110)

(220)

$t_{MA}$=2h

(200)

(211)

(111) (200)

(220)

(311)

(222)

$t_{MA}$=0h

ANGLE OF DIFFRACTION ( 2 $\theta$ )

20        40        60        80        100

23

FIG. 4    STEEL No.5

FIG. 5    STEEL No.5

24

EP 0 747 497 B1

## FIG. 6

## FIG. 7

## FIG. 8

STEEL No.5

ANNEALING TEMPERATURE 1050 ℃

Y-axis: AVERAGE GRAIN SIZE ( nm )
X-axis: ANNEALING TIME ( S )
(As HIP)

## FIG. 9

AVERAGE GRAIN SIZE d ( nm )

STEEL SIZE No.5

Y-axis: 0.2 % YIELD STRENGTH (MPa)
X-axis: $d^{-1/2}$ ( $nm^{-1/2}$ )

PRACTICABLE CONVENTIONAL STEEL,316L
( d=20$\mu$m )

26

FIG. 10

FIG. 11

EP 0 747 497 B1

# FIG. 12

STEEL No.5

# FIG. 13

29

## FIG. 14

## FIG. 15

## FIG. 16

# FIG. 17

# FIG. 18

## FIG. 19

## FIG. 20

EP 0 747 497 B1

# FIG. 21

42  41  42

xv

# FIG. 22

34

## FIG. 23

## FIG. 24

## FIG. 25

77

79

78

55

## FIG. 26

80

## FIG. 27

81

## FIG. 28

LIFTING     HOLD-DOWN     UPPER FLANGE

GRID PLATE   56     LOWER FLANGE

EP 0 747 497 B1

## FIG. 29

EYE-BOLT

PERI PHERAL FUEL SUPPORT

SUPPORT PLATE 52

LIMB BARREL

REINFORCING BEAM

GRID BAR

## FIG. 30

NEUTRON DETECTOR GUIDE TUBE

53

REACTOR PRESSURE VESSEL BOTTOM HEAD

NEUTRON DETECTOR HOUSING

DRY TUBE

## FIG. 31

HANDLE

B4 C TUBE

SHEATH

CONTROL
ROD BLADE

COUPLING
RELEASE
HANDLE

VELOCITY LIMITER

COUPLING
SOCKET

## FIG. 32

## FIG. 33

- 167
- 166
- 165
- 164
- 168
- 167

## FIG. 34

NEUTRON SOURCE
HOLDER

# FIG. 35

## FIG. 36

CONTROL ROD CLUSTER
DRIVE ADAPTER

CONTROL ROD
CLUSTER DRIVE

REACTOR VESSEL
TOP HEAD

UPPER CORE
SUPPORT PLATE

CORE BARREL

CONTROL ROD
CLUSTER GUIDE TUBE

SUPPORT COLUMN

CONTROL ROD
CLUSTER DRIVE SHAFT

PRIMARY COOLANT
INLET NOZZLE

PRIMARY COOLANT
OUTLET NOZZLE

CONTROL RODCLUSTER

UPPER CORE PLATE

SUPPORT PAD

THERMAL SHIELD

CORE BUFFLE

REACTOR VESSEL

BUFFLE SUPPORT
PLATE

FUEL ASSEMBLY

LOWER CORE PLATE

MIXING PLATE

LOWER CORE
SUPPORT PLATE

IN-CORE MONITOR THIMBLE

## FIG. 37

# FIG. 38